(19) Europäisches Patentamt
European Patent Office
Office européen des brevets

(11) EP 4 608 042 A1

(12) **EUROPEAN PATENT APPLICATION**
published in accordance with Art. 153(4) EPC

(43) Date of publication:
**27.08.2025 Bulletin 2025/35**

(21) Application number: **23880101.3**

(22) Date of filing: **11.10.2023**

(51) International Patent Classification (IPC):
***H04W 72/25*** *(2023.01)* ***H04W 72/04*** *(2023.01)*
***H04W 72/12*** *(2023.01)* ***H04L 5/00*** *(2006.01)*
***H04W 74/08*** *(2024.01)*

(52) Cooperative Patent Classification (CPC):
**H04L 5/00; H04W 72/04; H04W 72/12; H04W 72/25; H04W 74/08**

(86) International application number:
**PCT/KR2023/015571**

(87) International publication number:
**WO 2024/085522 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.10.2022 US 202263416934 P**

(71) Applicant: **LG Electronics Inc.**
**Yeongdeungpo-gu**
**Seoul 07336 (KR)**

(72) Inventors:
- **LEE, Seungmin**
  **Seoul 06772 (KR)**
- **HWANG, Daesung**
  **Seoul 06772 (KR)**
- **SEO, Hanbyul**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

# (54) METHOD AND DEVICE FOR DETERMINING WHETHER TO USE SECOND START SYMBOL IN SLOT IN UNLICENSED SPECTRUM

(57) Proposed is an operation method of a first device (100) in a wireless communication system. The method may comprise the steps of: acquiring information about a first candidate start symbol and a second candidate start symbol, wherein the first and second start symbols are included in a first slot; acquiring information related to an RB set configured in an SL BWP; and determining, on the basis of the information related to the RB set, whether to use the second candidate start symbol as an AGC symbol.

FIG. 19

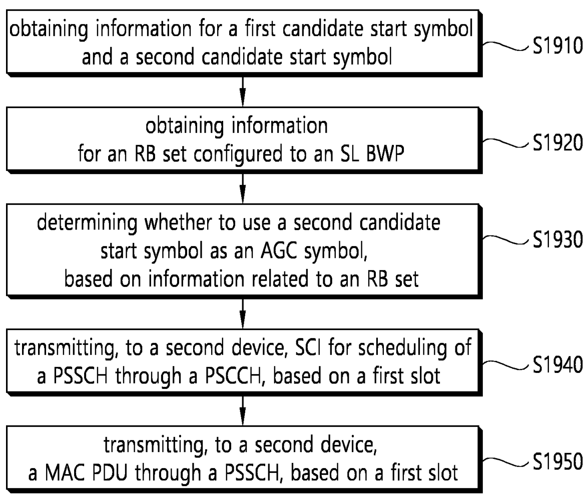


EP 4 608 042 A1

## Description

### TECHNICAL FIELD

This disclosure relates to a wireless communication system.

### BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an entity having an infrastructure (or infra) established therein, and so on. The V2X may be spread into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

### DISCLOSURE

### TECHNICAL SOLUTION

According to an embodiment of the present disclosure, a method for performing, by a first device, wireless communication may be proposed. For example, the method may comprise: obtaining information for a first candidate start symbol and a second candidate start symbol, wherein the first candidate start symbol and the second candidate start symbol may be included in a first slot; obtaining information related to a resource block (RB) set configured to a sidelink (SL) bandwidth part (BWP); determining whether to use the second candidate start symbol as an automatic gain control (ACG) symbol, based on the information related to an RB set; transmitting, to a second device, sidelink control information (SCI) for scheduling of a physical sidelink shared channel (PSSCH) through a physical sidelink control channel (PSCCH), based on the first slot; and transmitting, to the second device, a medium access control (MAC) protocol data unit (PDU) through the PSSCH, based on the first slot.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: obtaining information for a first candidate start symbol and a second candidate start symbol, wherein the first candidate start symbol and the second candidate start symbol may be included in a first slot; obtaining information related to a resource block (RB) set configured to a sidelink (SL) bandwidth part (BWP); determining whether to use the second candidate start symbol as an automatic gain control (ACG) symbol, based on the information related to an RB set; transmitting, to a second device, sidelink control information (SCI) for scheduling of a physical sidelink shared channel (PSSCH) through a physical sidelink control channel (PSCCH), based on the first slot; and transmitting, to the second device, a medium access control (MAC) protocol data unit (PDU) through the PSSCH, based on the first slot.

According to an embodiment of the present disclosure, a device adapted to control a first user equipment (UE) may be proposed. For example, the device may comprise: at least one processor; and at least one memory operably connected to the at least one processor and storing instructions that, based on being executed by the at least one processor, cause the first UE to perform operations. For example, the operations may comprise: obtaining information for a first candidate start symbol and a second candidate start symbol, wherein the first candidate start symbol and the second candidate start symbol may be included in a first slot; obtaining information related to a resource block (RB) set configured to a sidelink (SL) bandwidth part (BWP); determining whether to use the second candidate start symbol as an automatic gain control (ACG) symbol, based on the information related to an RB set; transmitting, to a second UE, sidelink control information (SCI) for scheduling of a physical sidelink shared channel (PSSCH) through a physical sidelink control channel (PSCCH), based on the first slot; and transmitting, to the second UE, a medium access control (MAC) protocol data unit (PDU) through the PSSCH, based on the first slot.

According to an embodiment of the present disclosure, a non-transitory computer-readable storage medium storing instructions may be proposed. For example, the instructions, based on being executed, may cause a first device to: obtain information for a first candidate start symbol and a second candidate start symbol, wherein the first candidate start symbol and the second candidate start symbol may be included in a first slot; obtain information related to a resource block (RB) set configured to a sidelink (SL) bandwidth part (BWP); determine whether to use the second candidate start symbol as an automatic gain control (ACG) symbol, based on the information related to an RB set; transmit, to a second device, sidelink control information (SCI) for scheduling of a physical sidelink shared channel (PSSCH) through a physical sidelink control channel (PSCCH), based on the first slot; and transmit, to the second device, a medium access control (MAC) protocol data unit (PDU) through the PSSCH, based on the first slot.

According to an embodiment of the present disclosure, a method for performing, by a second device, wireless communication may be proposed. For example, the method may comprise: receiving, from a first device, sidelink control information (SCI) for scheduling of a physical sidelink shared channel (PSSCH) through a physical sidelink control channel (PSCCH), based on a first slot; and receiving, from the first device, a medium access control (MAC) protocol data unit (PDU) through the PSSCH, based on the first slot, wherein the first slot may include a first candidate start symbol and a second candidate start symbol, and wherein whether the second candidate start symbol is used as an automatic gain control (AGC) symbol may be determined based on information related to a resource block (RB) set configured to a sidelink (SL) bandwidth part (BWP).

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, sidelink control information (SCI) for scheduling of a physical sidelink shared channel (PSSCH) through a physical sidelink control channel (PSCCH), based on a first slot; and receiving, from the first device, a medium access control (MAC) protocol data unit (PDU) through the PSSCH, based on the first slot, wherein the first slot may include a first candidate start symbol and a second candidate start symbol, and wherein whether the second candidate start symbol is used as an automatic gain control (AGC) symbol may be determined based on information related to a resource block (RB) set configured to a sidelink (SL) bandwidth part (BWP).

## BRIEF DESCRIPTION OF THE DRAWINGS

FIG. 1 shows a communication structure that can be provided in a 6G system, according to one embodiment of the present disclosure.

FIG. 2 shows an electromagnetic spectrum, according to one embodiment of the present disclosure.

FIG. 3 shows a structure of an NR system, based on an embodiment of the present disclosure.

FIG. 4 shows a radio protocol architecture, based on an embodiment of the present disclosure.

FIG. 5 shows a structure of a radio frame of an NR, based on an embodiment of the present disclosure.

FIG. 6 shows a structure of a slot of an NR frame, based on an embodiment of the present disclosure.

FIG. 7 shows an example of a BWP, based on an embodiment of the present disclosure.

FIG. 8 shows a procedure of performing V2X or SL communication by a UE based on a transmission mode, based on an embodiment of the present disclosure.

FIG. 9 shows three cast types, based on an embodiment of the present disclosure.

FIG. 10 shows an example of a wireless communication system supporting an unlicensed band, according to one embodiment of the present disclosure.

FIG. 11 shows a method of occupying resources in an unlicensed band, based on an embodiment of the present disclosure.

FIG. 12 shows a case in which a plurality of LBT-SBs are included in an unlicensed band, based on an embodiment of the present disclosure.

FIG. 13 shows CAP operations performed by a base station to transmit a downlink signal through an unlicensed band, based on an embodiment of the present disclosure.

FIG. 14 shows type 1 CAP operations performed by a UE to transmit an uplink signal, based on an embodiment of the present disclosure.

FIG. 15 shows a method in which a UE that has reserved transmission resource(s) informs another UE of the transmission resource(s), based on an embodiment of the present disclosure.

FIG. 16 shows a second candidate start symbol used as an AGC symbol, based on whether a GB is configured between the entire RB sets configured in the SL BWP, according to one embodiment of the present disclosure.

FIG. 17 shows a second candidate start symbol that is not used as an AGC symbol, based on whether a GB is configured between the entire RB sets being configured to the SL BWP, according to one embodiment of the present disclosure.

FIG. 18 shows a second candidate start symbol that is not used as an AGC symbol, based on whether a GB is configured between the entire RB sets configured to the SL BWP, according to one embodiment of the present disclosure.

FIG. 19 shows a procedure for a first device to perform wireless communication, according to one embodiment of the present disclosure.

FIG. 20 shows a procedure for a second device to perform wireless communication, according to one embodiment of the present disclosure.

FIG. 21 shows a communication system 1, based on an embodiment of the present disclosure.

FIG. 22 shows wireless devices, based on an embodiment of the present disclosure.

FIG. 23 shows a signal process circuit for a transmission signal, based on an embodiment of the present disclosure.

FIG. 24 shows another example of a wireless device, based on an embodiment of the present disclosure.

FIG. 25 shows a hand-held device, based on an embodiment of the present disclosure.

FIG. 26 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with a machine learning capability. The vision of the 6G system can be in four aspects: intelligent connectivity, deep connectivity, holographic connectivity, and ubiquitous connectivity, and the 6G system may satisfy the requirements as shown in Table 1 below. In other words, Table 1 is an example of the requirements of the 6G system.

[Table 1]

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

6G system may have key factors such as eMBB(Enhanced mobile broadband), URLLC(Ultra-reliable low latency communications), mMTC(massive machine-type communication), AI integrated communication, Tactile internet, High throughput, High network capacity, High energy efficiency, Low backhaul and access network congestion, Enhanced data security.

FIG. 1 shows a communication structure that can be provided in a 6G system, according to one embodiment of the present disclosure. The embodiment of FIG. 1 may be combined with various embodiments of the present disclosure.

6G systems are expected to have 50 times higher simultaneous radio connectivity than 5G radio systems. URLLC, a key feature of 5G, will become a more dominant technology in 6G communications by providing end-to-end delay of less than 1 ms. In 6G systems, volumetric spectral efficiency will be much better, as opposed to the area spectral efficiency often used today. 6G systems will be able to offer very long battery life and advanced battery technologies for energy harvesting, so mobile devices will not need to be recharged separately in 6G systems. In 6G, new network characteristics may be as follows.

- Satellites integrated network: To provide a global mobile population, 6G is expected to be integrated with satellite. The integration of terrestrial, satellite, and airborne networks into a single wireless communication system is important for 6G.
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer: 6G wireless networks will deliver power to charge batteries of devices such as smartphones and sensors. Therefore, wireless information and energy transfer (WIET) will be integrated.
- Ubiquitous super 3D connectivity: Super 3D connection will be generated from 6G ubiquity to access networks and core network functions on drones and very low Earth orbit satellites.

Given the above new network characteristics of 6G, some common requirements may be as follows

- small cell networks: The idea of small cell networks was introduced in cellular systems to improve received signal quality as a result of improved processing throughput, energy efficiency, and spectral efficiency. As a result, small cell networks are an essential characteristic for communication systems over 5G and beyond 5G (5GB). Therefore, 6G communication systems will also adopt the characteristics of small cell networks.
- Ultra-dense heterogeneous network: Ultra-dense heterogeneous networks will be another important characteristic of 6G communication systems. Multi-tier networks composed of heterogeneous networks will improve overall QoS and reduce costs.
- High-capacity backhaul: Backhaul connection is characterized by high-capacity backhaul networks to support large volumes of traffic. High-speed fiber optics and free-space optics (FSO) systems may be a possible solution to this problem.
- Radar technology integrated with mobile technology: High-precision localization (or location-based services) through communication is one of the features of 6G wireless communication systems. Therefore, radar systems will be integrated with 6G networks.

- Softwarization and virtualization: Softwareization and virtualization are two important features that are fundamental to the design process in a 5GB network to ensure flexibility, reconfigurability, and programmability. In addition, billions of devices may be shared on a shared physical infrastructure.

The following describes the core implementation technologies for 6G systems.

- Artificial Intelligence: The most important and new technology that will be introduced in the 6G system is AI. The 4G system did not involve AI. 5G systems will support partial or very limited AI. However, 6G systems will be fully AI-enabled for automation. Advances in machine learning will create more intelligent networks for real-time communication in 6G. The introduction of AI in telecommunications may streamline and improve real-time data transmission. AI may use numerous analytics to determine the way complex target operations are performed, which means AI can increase efficiency and reduce processing delays. Time-consuming tasks such as handover, network selection, and resource scheduling can be done instantly by using AI. AI may also play an important role in M2M, machine-to-human, and human-to-machine communications. In addition, AI may become a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Bmeaforming
- Optical wireless technology
- FSO Backhaul Network
- Non-Terrestrial Networks, NTN
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.

- Autonomous Driving, Self-driving: For perfect autonomous driving, vehicles must communicate with each other to inform each other of dangerous situations, or with infrastructure such as parking lots and traffic lights to check information such as the location of parking information and signal change times. Vehicle to Everything (V2X), a key element in building an autonomous driving infrastructure, is a technology that allows vehicles to communicate and share information with various elements on the road, in order to perform autonomous driving, such as vehicle-to-vehicle (V2V) wireless communication and vehicle-to-infrastructure (V2I) wireless communication. In order to maximize the performance of autonomous driving and ensure high safety, fast transmission speeds and low latency technologies are essential. In addition, in the future, autonomous driving will go beyond delivering warnings or guidance messages to a driver to actively intervene in vehicle operation and directly control the vehicle in dangerous situations, so the amount of information that needs to be transmitted and received will be vast, and 6G is expected to maximize autonomous driving with faster transmission speeds and lower latency than 5G.

For the sake of clarity, the description focuses on 5G NR, but the technical ideas of one embodiment of the present disclosure are not limited thereto. Various embodiments of the present disclosure may also be applicable to 6G communication systems.

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot ($N^{slot}_{symb}$), number of slots per frame ($N^{frame,u}_{slot}$), and number of slots per subframe ($N^{subframe,u}_{slot}$), depending on the SCS configuration (u), when Normal CP or Extended CP is used.

[Table 2]

| CP type | SCS (15*2^u^) | $N^{slot}_{syrnb}$ | $N^{frame,u}_{slot}$ | $N^{subframe,u}_{slot}$ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on).

A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{stan}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1 st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling ($\log_2(N^{SL}_{subChannel}(N^{SL}_{subChannel}+1)/2)$) bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling ($\log_2 N_{rsv_period}$) bits, where $N_{rsv_period}$ is the number of entries in the higher layer parameter sl-ResourceReservePeriodList, if higher layer parameter sl-MultiReserveResource is configured; 0 bit otherwise
- DMRS pattern - ceiling ($\log_2 N_{pattern}$) bits, where $N_{pattern}$ is the number of DMRS patterns configured by higher layer parameter sl-PSSCH-DMRS-TimePatternList
- 2$^{nd}$-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described.
SCI format 2-A is used for the decoding of PSSCH, with HARQ operation when HARQ-ACK information includes ACK or NACK, when HARQ-ACK information includes only NACK, or when there is no feedback of HARQ-ACK information.
The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 5
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.
SCI format 2-B is used for the decoding of PSSCH, with HARQ operation when HARQ-ACK information includes only NACK, or when there is no feedback of HARQ-ACK information.
The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, in accordance with an embodiment of the present disclosure. The embodiment of FIG. 9 may be combined with various embodiments of the present disclosure. Specifically, FIG. 9(a) shows broadcast-type SL communication, FIG. 9(b) shows unicast type-SL communication, and FIG. 9(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a UE procedure for determining a subset of resources to be reported to an higher layer in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources ( $r'_0, r'_1, r'_2, ...$ ) which may be subject to pre-emption.
- it is up to UE implementation to determine the subset of resources as requested by higher layers before or after the slot $r''_i$ - $T_3$ , where $r''_i$ is the slot with the smallest slot index among $(r_0, r_1, r_2, ... )$ and ( $r'_0, r'_1, r'_2, ...$ ) , and $T_3$ is equal to $T^{SL}_{proc,1}$ , where $T^{SL}_{proc,1}$ is defined in slots, and where $\mu_{SL}$ is the SCS configuration of the SL BWP.

The following higher layer parameters affect this procedure:

sl-SelectionWindowList: internal parameter $T_{2min}$ is set to the corresponding value from higher layer parameter sl-SelectionWindowList for the given value of $prio_{TX}$.

- sl-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter $X$ for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp_TX}$, if provided, is converted from units of msec to units of logical slots, resulting in $P'_{rsvp_TX}$ .

Notation:

( $t'^{SL}_0, t'^{SL}_1, t'^{SL}_2, ...$ ) may denote the set of slots which belongs to the sidelink resource pool.

For example, a UE may select a set of candidate resources (Sa) based on Table 5. For example, when resource (re)selection is triggered, a UE may select a candidate resource set (Sa) based on Table 5. For example, when re-evaluation or pre-emption is triggered, a UE may select a candidate resource set (Sa) based on Table 8.

[Table 8]

| |
|---|
| The following steps are used:<br>1) A candidate single-slot resource for transmission $R_{x,y}$ is defined as a set of $L_{subCH}$ contiguous sub-channels with sub-channel x+j in slot $t'^{SL}_{y}$ where $j$ = 0,..., $L_{subCH}$ - 1. The UE shall assume that any set of $L_{subCH}$ contiguous sub-channels included in the corresponding resource pool within the time interval [n + $T_1$, $n$ + $T_2$] correspond to one candidate single-slot resource, where<br>- selection of $T_1$ is up to UE implementation under $0 \leq T_1 \leq T^{SL}_{proc,1}$ , where $T^{SL}_{proc,1}$ is defined in slots in Table 8.1.4-2 where $\mu_{SL}$ is the SCS configuration of the SL BWP;<br>- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).<br>The total number of candidate single-slot resources is denoted by $M_{total}$.<br>2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.<br>3) The internal parameter $Th(p_i,p_j)$ is set to the corresponding value of RSRP threshold indicated by the i-th field in *sl-Thres-RSRP-List*, where $i = p_i + (p_j - 1) * 8$.<br>4) The set $S_A$ is initialized to the set of all the candidate single-slot resources.<br>5) The UE shall exclude any candidate single-slot resource $R_{x,y}$ from the set $S_A$ if it meets all the following conditions:<br>- the UE has not monitored slot $t'^{SL}_{m}$ in Step 2.<br>- for any periodicity value allowed by the higher layer parameter *sl-ResourceReservePeriodList* and a hypothetical SCI format 1-A received in slot $t'^{SL}_{m}$ with '*Resource reservation period* field set to that periodicity value and indicating all subchannels of the resource pool in this slot, condition c in step 6 would be met.<br>5a) If the number of candidate single-slot resources $R_{x,y}$ remaining in the set $S_A$ is smaller than $X \cdot M_{total}$, the set $S_A$ is initialized to the set of all the candidate single-slot resources as in step 4.<br>6) The UE shall exclude any candidate single-slot resource $R_{x,y}$ from the set $S_A$ if it meets all the following conditions:<br>a) the UE receives an SCI format 1-A in slot $t'^{SL}_{m}$ , and '*Resource reservation period'* field, if present, and '*Priority*' field in the received SCI format 1-A indicate the values $P_{rsvp_RX}$ and $prio_{RX}$, respectively according to Clause 16.4 in [6, TS 38.213],<br>b) the RSRP measurement performed, according to clause 8.4.2.1 for the received SCI format 1-A, is higher than $Th(prio_{RX},prio_{TX})$;<br>c) the SCI format received in slot $t'^{SL}_{m}$ or the same SCI format which, if and only if the '*Resource reservation period* field is present in the received SCI format 1-A, is assumed to be received in slot(s) $t'^{SL}_{m+q\times P'_{rsvp_RX}}$ determines according to clause 8.1.5 the set of resource blocks and slots which overlaps with $R_{x,y+j\times P'_{rsvp_TX}}$ for $q$=1, 2, ..., $Q$ and $j$=0,1, ..., $C_{resel}$ - 1. Here, $P'_{rsvp_RX}$ is $P_{rsvp_RX}$ converted to units of logical slots according to clause 8.1.7, $Q = \left\lceil \frac{T_{scal}}{P_{rsvp_RX}} \right\rceil$ if $P_{rsvp_RX} < T_{scal}$ and $n' - m \leq P'_{rsvp_RX}$ , where $t'^{SL}_{n'} = n$ if slot $n$ belongs to the set ( $t'^{SL}_{0}, t'^{SL}_{1}, \ldots, t'^{SL}_{T'_{max}-1}$ ), otherwise slot $t'^{SL}_{n'}$ is the first slot after slot $n$ belonging to the set ( $t'^{SL}_{0}, t'^{SL}_{1}, \ldots, t'^{SL}_{T'_{max}-1}$ ), otherwise $Q$ = 1. $T_{scal}$ is set to selection window size $T_2$ converted to units of msec.<br>7) If the number of candidate single-slot resources remaining in the set $S_A$ is smaller than $X \cdot M_{total}$, then $Th(p_i,p_j)$ is increased by 3 dB for each priority value $Th(p_i,p_j)$ and the procedure continues with step 4. The UE shall report set $S_A$ to higher layers.<br>If a resource $r_i$ from the set ($r_0,r_1,r_2$, ... ) is not a member of $S_A$, then the UE shall report re-evaluation of the resource $r_i$ to higher layers. |

(continued)

| |
|---|
| If a resource $r_i'$ from the set ( $r_0', r_1', r_2', ...$ ) meets the conditions below then the UE shall report pre-emption of the resource $r_i'$ to higher layers<br>- $r_i'$ is not a member of $S_A$, and<br>- $r_i'$ meets the conditions for exclusion in step 6, with $Th(prio_{RX}, prio_{TX})$ set to the final threshold after executing steps 1)-7), i.e. including all necessary increments for reaching $X \cdot M_{total}$, and<br>- the associated priority $prio_{RX}$, satisfies one of the following conditions:<br>- *sl-PreemptionEnable* is provided and is equal to 'enabled' and $prio_{TX} > prio_{RX}$<br>- *sl-PreemptionEnable* is provided and is not equal to 'enabled', and $prio_{RX} < prio_{pre}$ and $prio_{TX} > prio_{RX}$ |

Meanwhile, partial sensing may be supported for power saving of the UE. For example, in LTE SL or LTE V2X, the UE may perform partial sensing based on Tables 9 and 10.

[Table 9]

| |
|---|
| In sidelink transmission mode 4, when requested by higher layers in subframe n for a carrier, the UE shall determine the set of resources to be reported to higher layers for PSSCH transmission according to the steps described in this Subclause.<br>Parameters $L_{subCH}$ the number of sub-channels to be used for the PSSCH transmission in a subframe, $P_{rsvp_TX}$ the resource reservation interval, and $prio_{TX}$ the priority to be transmitted in the associated SCI format 1 by the UE are all provided by higher layers.<br>In sidelink transmission mode 3, when requested by higher layers in subframe n for a carrier, the UE shall determine the set of resources to be reported to higher layers in sensing measurement according to the steps described in this Subclause. Parameters $L_{subCH}$, $P_{rsvp_TX}$ and $prio_{TX}$ are all provided by higher layers. $C_{resel}$ is determined by $C_{resel}$=10*SL_RESOURCE_RESELECTION_COUNTER, where SL_RESOURCE_RESELECTION_COUNTER is provided by higher layers.<br>...<br>If partial sensing is configured by higher layers then the following steps are used:<br>1) A candidate single-subframe resource for PSSCH transmission $R_{x,y}$ is defined as a set of $L_{subCH}$ contiguous sub-channels with sub-channel x+j in subframe $t_y^{SL}$ where $j$ = 0, ..., $L_{subCH}$ - 1. The UE shall determine by its implementation a set of subframes which consists of at least $Y$ subframes within the time interval $[n + T_1, n + T_2]$ where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement and $Y$ shall be greater than or equal to the high layer parameter *minNumCandidateSF*. The UE shall assume that any set of $L_{subCH}$ contiguous sub-channels included in the corresponding PSSCH resource pool within the determined set of subframes correspond to one candidate single-subframe resource. The total number of the candidate single-subframe resources is denoted by $M_{total}$.<br>2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes.<br>3) The parameter $Th_{a,b}$ is set to the value indicated by the i-th *SL-ThresPSSCH-RSRP* field in *SL-ThresPSSCH-RSRP-List* where i = ($a$ - 1) * 8 + $b$.<br>4) The set $S_A$ is initialized to the union of all the candidate single-subframe resources. The set $S_B$ is initialized to an empty set.<br>5) The UE shall exclude any candidate single-subframe resource$R_{x,y}$ from the set $S_A$ if it meets all the following conditions:<br>- the UE receives an SCI format 1 in subframe $t_m^{SL}$ , and "Resource reservation" field and "Priority" field in the received SCI format 1 indicate the values $P_{rsvp_RX}$ *and* $prio_{RX}$, respectively.<br>- PSSCH-RSRP measurement according to the received SCI format 1 is higher than $Th_{prioTX, prioRX}$. |

(continued)

| |
|---|
| - the SCI format received in subframe $t_m^{SL}$ or the same SCI format 1 which is assumed to be received in subframe(s) $t_{m+q\times P_{step}\times P_{rsvp_{RX}}}^{SL}$ determines according to 14.1.1.4C the set of resource blocks and subframes which overlaps with $R_{x,y+j\times P'rsvp_TX}$ for $q$=1, 2, ..., $Q$ and $j$=0, 1, ..., $C_{resel}$ - 1. Here, $Q = \frac{1}{P_{rsvp_RX}}$ if $P_{rsvp_RX}$ and $y'$ - $m \leq P_{step} \times P_{rsvp_RX} + P_{step}$, where $t_{y'}^{SL}$ is the last subframe of the $Y$ subframes , and $Q$ = 1 otherwise. |
| 6) If the number of candidate single-subframe resources remaining in the set $S_A$ is smaller than 0.2 · $M_{total}$, then Step 4 is repeated with $Th_{a,b}$ increased by 3 dB. |

[Table 10]

| |
|---|
| 7) For a candidate single-subframe resource $R_{x,y}$ remaining in the set $S_A$, the metric $E_{x,y}$ is defined as the linear average of S-RSSI measured in sub-channels x+k for k = 0, ..., $L_{subCH}$ - 1 in the monitored subframes in Step 2 that can be expressed by $t_{y-P_{step}*j}^{SL}$ for a non-negative integer $j$. |
| 8) The UE moves the candidate single-subframe resource $R_{x,y}$ with the smallest metric $E_{x,y}$ from the set $S_A$ to $S_B$. This step is repeated until the number of candidate single-subframe resources in the set $S_B$ becomes greater than or equal to 0.2 · $M_{total}$. |
| 9) When the UE is configured by upper layers to transmit using resource pools on multiple carriers, it shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time. The UE shall report set $S_B$ to higher layers. |
| If transmission based on random selection is configured by upper layers and when the UE is configured by upper layers to transmit using resource pools on multiple carriers, the following steps are used: |
| 1) A candidate single-subframe resource for PSSCH transmission $R_{x,y}$ is defined as a set of $L_{subCH}$ contiguous sub-channels with sub-channel x+j in subframe $t_y^{SL}$ where $j$ = 0, ..., $L_{subCH}$ - 1. The UE shall assume that any set of $L_{subCH}$ contiguous sub-channels included in the corresponding PSSCH resource pool within the time interval [n + $T_1$,$n$ + $T_2$] corresponds to one candidate single-subframe resource, where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement. The total number of the candidate single-subframe resources is denoted by $M_{total}$. |
| 2) The set $S_A$ is initialized to the union of all the candidate single-subframe resources. The set $S_B$ is initialized to an empty set. |
| 3) The UE moves the candidate single-subframe resource $R_{x,y}$ from the set $S_A$ to $S_B$. |
| 4) The UE shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time. |
| The UE shall report set $S_B$ to higher layers. |

Meanwhile, in the conventional unlicensed spectrum (NR-U), a communication method between a UE and a base station is supported in an unlicensed band. In addition, a mechanism for supporting communication in an unlicensed band between sidelink UEs is planned to be supported in Rel-18.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

FIG. 10 shows an example of a wireless communication system supporting an unlicensed band, according to one embodiment of the present disclosure. For example, FIG. 10 may include an unlicensed spectrum (NR-U) wireless communication system. The embodiment of FIG. 10 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 10, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 10. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 10, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.

- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of $T_{sl}$ = 9 us. The base station or the UE senses a channel during a sensing slot duration. If power detected for at least 4 us within the sensing slot duration is less than an energy detection threshold $X_{thresh}$, the sensing slot duration $T_{sl}$ is considered to be idle. Otherwise, the sensing slot duration $T_{sl}$ = 9 us is considered to be busy. CAP may also be referred to as listen before talk (LBT). For example, a channel access procedure (CAP) may include an LBT, and channel sensing may be performed to monitor the power of that channel during a specific time interval (channel sensing interval) for the CAP.
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

FIG. 11 shows a method of occupying resources in an unlicensed band, based on an embodiment of the present disclosure. The embodiment of FIG. 11 may be combined with various embodiments of the present disclosure.

Referring to FIG. 11, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is the that clear channel assessment (CCA) is confirmed. If a CCA threshold (e.g., $X_{Thresh}$) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT. For example, a channel access procedure (CAP) may include an LBT, and channel sensing may be performed to monitor the power of that channel during a specific time interval (channel sensing interval) for the CAP.

Table 11 shows an example of the channel access procedure (CAP) supported in NR-U.

[Table 11]

| | Type | Explanation |
|---|---|---|
| DL | Type 1 CAP | CAP with random back-off<br>- time duration spanned by the sensing slots that are sensed to be idle before a downlink transmission(s) is random |
| | Type 2 CAP<br>- Type 2A, 2B, 2C | CAP without random back-off<br>- time duration spanned by sensing slots that are sensed to be idle before a downlink transmission(s) is deterministic |
| UL or SL | Type 1 CAP | CAP with random back-off<br>- time duration spanned by the sensing slots that are sensed to be idle before an uplink or sidelink transmission(s) is random |
| | Type 2 CAP<br>- Type 2A, 2B, 2C | CAP without random back-off<br>- time duration spanned by sensing slots that are sensed to be idle before an uplink or sidelink transmission(s) is deterministic |

Referring to Table 11, the LBT type or CAP for DL/UL/SL transmission may be defined. However, Table 11 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 12 shows a case in which a plurality of LBT-SBs are included in an unlicensed band, based on an embodiment of the present disclosure. The embodiment of FIG. 12 may be combined with various embodiments of the present disclosure.

Referring to FIG. 12, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB # (K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:

- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 12 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

[Table 12]

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

(1) Type 1 downlink (DL) CAP Method

In the type 1 DL CAP, the length of a time duration spanned by sensing slots sensed to be idle before transmission(s) may be random. The type 1 DL CAP may be applied to the following transmissions:

- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

FIG. 13 shows CAP operations performed by a base station to transmit a downlink signal through an unlicensed band, based on an embodiment of the present disclosure. The embodiment of FIG. 13 may be combined with various embodiments of the present disclosure.

Referring to FIG. 13, the base station may sense whether a channel is idle for sensing slot durations of a defer duration Ta. Then, if a counter N is zero, the base station may perform transmission (S134). In this case, the base station may adjust the counter N by sensing the channel for additional sensing slot duration(s) according to the following steps:

Step 1) (S120) The base station sets N to $N_{init}$ (N= $N_{init}$), where $N_{init}$ is a random number uniformly distributed between 0 and $CW_p$. Then, step 4 proceeds.
Step 2) (S140) If N>0 and the base station determines to decrease the counter, the base station sets N to N-1 (N=N-1).
Step 3) (S150) The base station senses the channel for the additional sensing slot duration. If the additional sensing slot duration is idle (Y), step 4 proceeds. Otherwise (N), step 5 proceeds.
Step 4) (S130) If N=0 (Y), the base station terminates the CAP (S132). Otherwise (N), step 2 proceeds.
Step 5) (S160) The base station senses the channel until either a busy sensing slot is detected within an additional defer duration $T_d$ or all the slots of the additional defer duration $T_d$ are detected to be idle.
Step 6) (S170) If the channel is sensed to be idle for all the slot durations of the additional defer duration $T_d$ (Y), step 4 proceeds. Otherwise (N), step 5 proceeds.

Table 13 shows that $m_p$, a minimum contention window (CW), a maximum CW, a maximum channel occupancy time (MCOT), and an allowed CW size, which are applied to the CAP, vary depending on channel access priority classes.

[Table 13]

| Channel Access Priority Class (p) | $m_p$ | $CW_{min,p}$ | $CW_{max,p}$ | $T_{mcot,p}$ | allowed $CW_p$ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |

(continued)

| Channel Access Priority Class (p) | $m_p$ | $CW_{min,p}$ | $CW_{max,p}$ | $T_{mcot,p}$ | allowed $CW_p$ sizes |
|---|---|---|---|---|---|
| 4 | 7 | 15 | 1023 | 8 or 10 ms | {15,31,63,127,255,511,1023} |

Referring to Table 13, a contention window size (CWS), a maximum COT value, etc. for each CAPC may be defined. For example, $T_d$ may be equal to $T_f + m_p * T_{sl}$ ($T_d = T_f + m_p * T_{sl}$).

The defer duration $T_d$ is configured in the following order: duration $T_f$ (16 us) + $m_p$ consecutive sensing slot durations $T_{sl}$ (9 us). $T_f$ includes the sensing slot duration $T_{sl}$ at the beginning of the 16 us duration.

The following relationship is satisfied: $CW_{min,p} <= CW_p <= CW_{max,p}$. $CW_p$ may be configured by $CW_p = CW_{min,p}$ and updated before step 1 based on HARQ-ACK feedback (e.g., the ratio of ACK or NACK) for a previous DL burst (e.g., PDSCH) (CW size update). For example, $CW_p$ may be initialized to $CW_{min,p}$ based on the HARQ-ACK feedback for the previous DL burst. Alternatively, $CW_p$ may be increased to the next higher allowed value or maintained as it is.

(2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration $T_{short_dl}$ = 25 us. Herein, $T_{short_dl}$ includes the duration $T_f$ (=16 us) and one sensing slot duration immediately after the duration $T_f$, where the duration $T_f$ includes a sensing slot at the beginning thereof.

- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for $T_f$ = 16 us. $T_f$ includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

(1) Type 1 uplink (UL) CAP Method

In the type 1 UL CAP, the length of a time duration spanned by sensing slots sensed to be idle before transmission(s) is random. The type 1 UL CAP may be applied to the following transmissions.

- PUSCH/SRS transmission(s) scheduled and/or configured by the base station
- PUCCH transmission(s) scheduled and/or configured by the base station
- Transmission(s) related to a random access procedure (RAP)

FIG. 14 shows type 1 CAP operations performed by a UE to transmit an uplink signal, based on an embodiment of the present disclosure. The embodiment of FIG. 14 may be combined with various embodiments of the present disclosure.

Referring to FIG. 14, the UE may sense whether a channel is idle for sensing slot durations of a defer duration $T_d$. Then, if a counter N is zero, the UE may perform transmission (S234). In this case, the UE may adjust the counter N by sensing the channel for additional sensing slot duration(s) according to the following steps:

Step 1) (S220) The UE sets N to $N_{init}$ ($N = N_{init}$), where $N_{init}$ is a random number uniformly distributed between 0 and $CW_p$. Then, step 4 proceeds.

Step 2) (S240) If N>0 and the UE determines to decrease the counter, the UE sets N to N-1 (N = N-1).

Step 3) (S250) The UE senses the channel for the additional sensing slot duration. If the additional sensing slot duration is idle (Y), step 4 proceeds. Otherwise (N), step 5 proceeds.

Step 4) (S230) If N=0 (Y), the UE terminates the CAP (S232). Otherwise (N), step 2 proceeds.

Step 5) (S260) The UE senses the channel until either a busy sensing slot is detected within an additional defer duration $T_d$ or all the slots of the additional defer duration $T_d$ are detected to be idle.

Step 6) (S270) If the channel is sensed to be idle for all the slot durations of the additional defer duration $T_d$ (Y), step 4 proceeds. Otherwise (N), step 5 proceeds.

Table 14 shows that $m_p$, a minimum CW, a maximum CW, a maximum channel occupancy time (MCOT), and an allowed CW size, which are applied to the CAP, vary depending on channel access priority classes.

[Table 14]

| Channel Access Priority Class (p) | $m_p$ | $CW_{min,p}$ | $CW_{max,p}$ | $T_{ulmcot,p}$ | allowed $CW_p$ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 14, a contention window size (CWS), a maximum COT value, etc. for each CAPC may be defined. For example, $T_d$ may be equal to $T_f + m_p * T_{sl}$ ($T_d = T_f + m_p * T_{sl}$).

The defer duration $T_d$ is configured in the following order: duration $T_f$ (16 us) + $m_p$ consecutive sensing slot durations $T_{sl}$ (9 us). $T_f$ includes the sensing slot duration $T_{sl}$ at the beginning of the 16 us duration.

The following relationship is satisfied: $CW_{min,p} <= CW_p <= CW_{max,p}$. $CW_p$ may be configured by $CW_p = CW_{min,p}$ and updated before step 1 based on an explicit/implicit reception response for a previous UL burst (e.g., PUSCH) (CW size update). For example, $CW_p$ may be initialized to $CW_{min,p}$ based on the explicit/implicit reception response for the previous UL burst. Alternatively, $CW_p$ may be increased to the next higher allowed value or maintained as it is.

(2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration $T_{short_dl}$ = 25 us. Herein, $T_{short_dl}$ includes the duration $T_f$ (=16 us) and one sensing slot duration immediately after the duration $T_f$. In the type 2A UL CAP, $T_f$ includes a sensing slot at the beginning thereof. In the type 2B UL CAP, the UE may perform transmission immediately after the channel is sensed to be idle for the sensing duration $T_f$ = 16 us. In the type 2B UL CAP, $T_f$ includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, $m_p$, etc.). For example, the UE may select a backoff counter (BC) after selecting a random value between the minimum CW and the maximum CW mapped to the CAPC. In this case, for example, the BC may be a positive integer less than or equal to the random value. The UE sensing a channel decreases the BC by 1 if the channel is idle. If the BC becomes zero and the UE detects that the channel is idle for the time $T_d$ ($T_d = T_f + m_p * T_{sl}$), the UE may attempt to transmit data by occupying the channel. For example, $T_{sl}$ (= 9 usec) is a basic sensing unit or sensing slots, and may include a measurement duration for at least 4 usec. For example, the front 9 usec of $T_f$ (= 16 usec) may be configured to be $T_{sl}$.

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 25 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

Meanwhile, in a future system, a UE may perform a sidelink transmission and/or reception operation in an unlicensed band. For operations in an unlicensed band, depending on band-specific regulations or requirements, a UE's transmission may be preceded by a channel sensing operation (e.g., energy detection/measurement) for the channel to be used, a UE may perform a transmission in the unlicensed band only if, as a result of the channel sensing, the channel or RB set to be used is determined to be IDLE (e.g., if the measured energy is less than or equal to or greater than a certain threshold value), and, if, according to a result of the channel sensing, the channel or RB set to be used is determined to be BUSY (e.g., if the measured energy is greater than or equal to or greater than a certain threshold value), the UE may cancel all or part of the transmission in the unlicensed band.

Meanwhile, in operation in an unlicensed band, a UE may omit or simplify the channel sensing operation (i.e., make the channel sensing interval relatively small) within a certain time interval after a transmission for a certain time period, or conversely, after a certain time interval after the transmission, the UE may decide whether to transmit or not after performing the usual channel sensing operation.

On the other hand, in a transmission in an unlicensed band, depending on regulations or requirements, the size and/or power spectral density (PSD) of the time interval and/or frequency occupied region of the signal/channel transmitted by the UE may be greater than or equal to a certain level, respectively.

On the other hand, in unlicensed bands, in order to simplify channel sensing, it may be informed through channel occupancy time (COT) interval information that the channel obtained through initial general channel sensing is occupied for a certain period of time, and the length of the COT duration may be configured to have different maximum values depending on the priority of the service or data packet or the channel access priority class (CAPC).

On the one hand, a base station may share a COT duration that it has secured through channel sensing in the form of a DCI transmission, and a UE may perform a specific (indicated) channel sensing type and/or CP extension within the COT duration based on the DCI information received from the base station. On the other hand, a UE may share a COT duration that it has secured through channel sensing to a base station that is the destination of the UE's UL transmission, and the relevant information may be provided through the UL via CG-UCI. In the above situation, the base station may perform simplified channel sensing within the COT duration shared by the UE.

In the case of SL communication, there are situations where a UE is indicated by a base station to use resources for SL transmission through DCI or RRC signaling, such as Mode 1 RA operation, and there are situations where a UE performs SL transmission and reception through sensing operation between UEs without the assistance of a base station, such as Mode 2 RA operation.

On the other hand, for channel access type 1, which can be used regardless of the channel occupancy time (COT) configuration, the procedures shown in Table 15 and Table 16 for DL transmissions and Table 17 and Table 18 for UL transmissions were performed.

In the present disclosure, channel access may be mutually replaceable/substitutable with channel sensing.

[Table 15]

| |
|---|
| The eNB/gNB may transmit a transmission after first sensing the channel to be idle during the sensing slot durations of a defer duration $T_d$ and after the counter N is zero in step 4. The counter N is adjusted by sensing the channel for additional sensing slot duration(s) according to the steps below:<br>1) set $N = N_{init}$, where $N_{init}$ is a random number uniformly distributed between 0 and $CW_p$, and go to step 4;<br>2) if $N > 0$ and the eNB/gNB chooses to decrement the counter, set $N = N - 1$;<br>3) sense the channel for an additional sensing slot duration, and if the additional sensing slot duration is idle, go to step 4; else, go to step 5;<br>4) if $N = 0$, stop; else, go to step 2. |

(continued)

| |
|---|
| 5) sense the channel until either a busy sensing slot is detected within an additional defer duration $T_d$ or all the sensing slots of the additional defer duration $T_d$ are detected to be idle;<br>6) if the channel is sensed to be idle during all the sensing slot durations of the additional defer duration $T_d$, go to step 4; else, go to step 5;<br>If an eNB/gNB has not transmitted a transmission after step 4 in the procedure above, the eNB/gNB may transmit a transmission on the channel, if the channel is sensed to be idle at least in a sensing slot duration $T_{sl}$ when the eNB/gNB is ready to transmit and if the channel has been sensed to be idle during all the sensing slot durations of a defer duration $T_d$ immediately before this transmission. If the channel has not been sensed to be idle in a sensing slot duration $T_{sl}$ when the eNB/gNB first senses the channel after it is ready to transmit or if the channel has been sensed to be not idle during any of the sensing slot durations of a defer duration $T_d$ immediately before this intended transmission, the eNB/gNB proceeds to step 1 after sensing the channel to be idle during the sensing slot durations of a defer duration $T_d$.<br>The defer duration $T_d$ consists of duration $T_f$ = 16us immediately followed by $m_p$ consecutive sensing slot durations $T_{sl}$, and $T_f$ includes an idle sensing slot duration $T_{sl}$ at start of $T_f$. |

[Table 16]

| |
|---|
| If a gNB transmits transmissions including PDSCH that are associated with channel access priority class p on a channel, the gNB maintains the contention window value $CW_p$ and adjusts $CW_p$ before step 1 of the procedure described in clause 4.1.1 for those transmissions using the following steps:<br>1) For every priority class $p \in \{1,2,3,4\}$, set $CW_p = CW_{min,p}$.<br>2) If HARQ-ACK feedback is available after the last update of $W_p$ , go to step 3. Otherwise, if the gNB transmission after procedure described in clause 4.1.1 does not include a retransmission or is transmitted within a duration $T_w$ from the end of the *reference duration* corresponding to the earliest DL channel occupancy after the last update of $CW_p$, go to step 5; otherwise go to step 4.<br>3) The HARQ-ACK feedback(s) corresponding to PDSCH(s) in the reference duration for the latest DL channel occupancy for which HARQ-ACK feedback is available is used as follows:<br>a. If at least one HARQ-ACK feedback is 'ACK' for PDSCH(s) with transport block based feedback or at least 10% of HARQ-ACK feedbacks is 'ACK' for PDSCH CBGs transmitted at least partially on the channel with code block group based feedback, go to step 1; otherwise go to step 4.<br>4) Increase $CW_p$ for every priority class $p \in \{1,2,3,4\}$ to the next higher allowed value.<br>5) For every priority class p $\in$ {1,2,3,4}, maintain $CW_p$ as it is; go to step 2.<br>The *reference duration* and duration $T_w$ in the procedure above are defined as follows:<br>- The *reference duration* corresponding to a channel occupancy initiated by the gNB including transmission of PDSCH(s) is defined in this clause as a duration starting from the beginning of the channel occupancy until the end of the first slot where at least one unicast PDSCH is transmitted over all the resources allocated for the PDSCH, or until the end of the first transmission burst by the gNB that contains unicast PDSCH(s) transmitted over all the resources allocated for the PDSCH, whichever occurs earlier. If the channel occupancy includes a unicast PDSCH, but it does not include any unicast PDSCH transmitted over all the resources allocated for that PDSCH, then, the duration of the first transmission burst by the gNB within the channel occupancy that contains unicast PDSCH(s) is the *reference duration* for CWS adjustment.<br>- $T_w = \max(T_A, T_B + 1ms)$ where $T_B$ is the duration of the transmission burst from start of the *reference duration* in ms and $T_A$ = 5ms if the absence of any other technology sharing the channel can not be guaranteed on a long-term basis (e.g. by level of regulation), and $T_A$ = *10ms* otherwise.<br>If a gNB transmits transmissions using Type 1 channel access procedures associated with the channel access priority class p on a channel and the transmissions are not associated with explicit HARQ-ACK feedbacks by the corresponding UE(s), the gNB adjusts $CW_p$ before step 1 in the procedures described in subclase 4.1.1, using the latest $CW_p$ used for any DL transmissions on the channel using Type 1 channel access procedures associated with the channel access priority class *p.* If the corresponding channel access priority class *p* has not been used for any DL transmissions on the channel, $CW_p = CW_{min,p}$ is used. |

| |
|---|
| A UE may transmit the transmission using Type 1 channel access procedure after first sensing the channel to be idle during the slot durations of a defer duration $T_d$, and afther the counter $N$ is zero in step 4. The counter $N$ is adjusted by sending the channel for additional slot duration (s) according to the steps described below.<br>1) set $N = N_{init}$, where $N_{init}$ is a random number uniformly distributed between 0 and $CW_p$, and go to step 4;<br>2) if $N > 0$ and the UE chooses to decrement the counter, set $N = N - 1$;<br>3) sense the channel for an additional slot duration, and if the additional slot duration is idle, go to step 4; alse, go to step 5;<br>4) if $N = 0$, stop; else, go to step 2.<br>5) sense the channel until either a busy slot is detected within an additional defer duration $T_d$ or all the slots of the additional defer duration $T_d$ are detected to be idle;<br>6) if the channel is sensed to be idle during all the slot durations of the additional defer duration $T_d$, go to step 4; else, go to step 5;<br>If a UE has not transmitted a UL transmission on a channel on which Ul transmission(s) are performed after step 4 in the procedure above, the UE may transmit a transmission of the channel, if the channel is sensed to be idle at least in a sensing slot duration $T_{sl}$ when the UE is ready to transmit the transmission and if the channel has been sensed to be idle during all the slot durations of a defer duration $T_d$ immediatly before the transmission. If the channel has not been sensed to be idle in a sensing slot duration $Tsl$ when the UE first senses the channel after it is ready to transmit, or if the channel after it is ready to transmit, or if the channel has not been sensed to be idle during any of the sensing slot durations of a defer duration $T_d$ immediately before the intended transmission, the UE proceeds to step 1 after sensing the channel to be idle during the slot durations of a defer duration $T_d$. The defer duration $T_d$ consists of duration $T_f = 16us$ immediately followed by $m_p$ consecutive slot durations where each slot duration is $T_{sl} = 9us$, and $T_f$ includes an idle slot duration $T_{sl}$ at start fo $T_f$. |

.

[Table 18]

| | |
|---|---|
| If a UE transmits transmissions using Type 1 channel access procedures that are associated with channel access priority class $p$ on a channel, the UE maintains the contention window value $CW_p$ and adjusts $CW_p$ for those transmissions before step 1 of the procedure described in clause 4.2.1.1, using the following steps:<br>1) For every priority class $p \in \{1,2,3,4\}$, set $CW_p = CW_{min,p}$;<br>2) If HARQ-ACK feedback is available after the last update of $CW_p$, go to step 3. Otherwise, if the UE transmission after procedure described in clause 4.2.1.1 does not include a retransmission or is transmitted within a duration $T_w$ from the end of the *reference duration* corresponding to the earliest UL channel occupancy after the last update of $CW_p$, go to step 5; otherwise go to step 4.<br>3) The HARQ-ACK feedback(s) corresponding to PUSCH(s) in the *reference duration* for the latest UL channel occupancy for which HARQ-ACK feedback is available is used as follows: | |
| | a. If at least one HARQ-ACK feedback is 'ACK' for PUSCH(s) with transport block (TB) based feedback or at least 10% of HARQ-ACK feedbacks are 'ACK' for PUSCH CBGs transmitted at least partially on the channel with code block group (CBG) based feedback, go to step 1; otherwise go to step 4. |
| 4) Increase $CW_p$ for every priority class $p \in \{1,2,3,4\}$ to the next higher allowed value;<br>5) For every priority class $p \in \{1,2,3,4\}$, maintain $CW_p$ as it is; go to step 2.<br>The HARQ-ACK feedback, *reference duration* and duration $T_w$ in the procedure above are defined as the following: | |

(continued)

| |
|---|
| - For the purpose of contention window adjustment in this clause, HARQ-ACK feedback for PUSCH(s) transmissions are expected to be provided to UE(s) explicitly or implicitly where explicit HARQ-ACK is determined based on the valid HARQ-ACK feedback in a corresponding CG-DFI as described in clause 10.5 in [7], and implicit HARQ-ACK feedback is determined based on the indication for a new transmission or retransmission in the DCI scheduling PUSCH(s) as follows: |
| - If a new transmission is indicated, 'ACK' is assumed for the transport blocks or code block groups in the corresponding PUSCH(s) for the TB-based and CBG-based transmission, respectively. |
| - If a retransmission is indicated for TB-based transmissions, 'NACK' is assumed for the transport blocks in the corresponding PUSCH(s). |
| - If a retransmission is indicated for CBG-based transmissions, if a bit value in the code block group transmission information (CBGTI) field is '0' or '1' as described in clause 5.1.7.2 in [8], 'ACK' or 'NACK' is assumed for the corresponding CBG in the corresponding PUSCH(s), respectively. |
| - The *reference duration* corresponding to a channel occupancy initiated by the UE including transmission of PUSCH(s) is defined in this clause as a duration starting from the beginning of the channel occupancy until the end of the first slot where at least one PUSCH is transmitted over all the resources allocated for the PUSCH, or until the end of the first transmission burst by the UE that contains PUSCH(s) transmitted over all the resources allocated for the PUSCH, whichever occurs earlier. If the channel occupancy includes a PUSCH, but it does not include any PUSCH transmitted over all the resources allocated for that PUSCH, then, the duration of the first transmission burst by the UE within the channel occupancy that contains PUSCH(s) is the *reference duration* for CWS adjustment. |
| - $T_w = \max(T_A, T_B + 1\text{ms})$ where $T_B$ is the duration of the transmission burst from start of the *reference duration* in ms and $T_A$ = 5ms if the absence of any other technology sharing the channel cannot be guaranteed on a long-term basis (e.g. by level of regulation), and $T_A$ = 10ms otherwise. |

On the other hand, within the channel occupancy time (COT), the simplified channel access type 2 can be used before transmission, and the procedure as shown in Table 19 for DL transmission and Table 20 for UL transmission is performed.

[Table 19]

| | |
|---|---|
| 4.1.2 | Type 2 DL channel access procedures |
| This clause describes channel access procedures to be performed by an eNB/gNB where the time duration spanned by sensing slots that are sensed to be idle before a downlink transmission(s) is deterministic. | |
| If an eNB performs Type 2 DL channel access procedures, it follows the procedures described in clause 4.1.2.1. | |
| Type 2A channel access procedures as described in clause 4.1.2.1 are only applicable to the following transmission(s) performed by an eNB/gNB: | |
| - Transmission(s) initiated by an eNB including discovery burst and not including PDSCH where the transmission(s) duration is at most 1*ms*, or | |
| - Transmission(s) initiated by a gNB with only discovery burst or with discovery burst multiplexed with non-unicast information, where the transmission(s) duration is at most 1*ms*, and the discovery burst duty cycle is at most 1/20, or | |
| - Transmission(s) by an eNB/ gNB following transmission(s) by a UE after a gap of 25us in a shared channel occupancy as described in clause 4.1.3. | |
| Type 2B or Type 2C DL channel access procedures as described in clause 4.1.2.2 and 4.1.2.3, respectively, are applicable to the transmission(s) performed by a gNB following transmission(s) by a UE after a gap of 16us or up to 16us, respectively, in a shared channel occupancy as described in clause 4.1.3. | |
| 4.1.2.1 | Type 2A DL channel access procedures |

(continued)

| |
|---|
| An eNB/gNB may transmit a DL transmission immediately after sensing the channel to be idle for at least a sensing interval $T_{short_dl}$ = *25us*. $T_{short_dl}$ consists of a duration $T_f$ = 16us immediately followed by one sensing slot and $T_f$ includes a sensing slot at start of $T_f$. The channel is considered to be idle for $T_{short_dl}$ if both sensing slots of $T_{short_dl}$ are sensed to be idle. |
| 4.1.2.2 Type 2B DL channel access procedures |
| A gNB may transmit a DL transmission immediately after sensing the channel to be idle within a duration of $T_f$ = *16us*. $T_f$ includes a sensing slot that occurs within the last 9us of $T_f$. The channel is considered to be idle within the duration $T_f$ if the channel is sensed to be idle for a total of at least 5us with at least 4us of sensing occurring in the sensing slot. |
| 4.1.2.3 Type 2C DL channel access procedures |
| When a gNB follows the procedures in this clause for transmission of a DL transmission, the gNB does not sense the channel before transmission of the DL transmission. The duration of the corresponding DL transmission is at most 584us. |

[Table 20]

| |
|---|
| 4.2.1.2 Type 2 UL channel access procedure |
| This clause describes channel access procedures by UE where the time duration spanned by the sensing slots that are sensed to be idle before a UL transmission(s) is deterministic. |
| If a UE is indicated by an eNB to perform Type 2 UL channel access procedures, the UE follows the procedures described in clause 4.2.1.2.1. |
| 4.2.1.2.1 Type 2A UL channel access procedure |
| If a UE is indicated to perform Type 2A UL channel access procedures, the UE uses Type 2A UL channel access procedures for a UL transmission. The UE may transmit the transmission immediately after sensing the channel to be idle for at least a sensing interval $T_{short_ul}$ = 25us. $T_{short_ul}$ consists of a duration $T_f$ = 16usimmediately followed by one sensing slot and $T_f$ includes a sensing slot at start of $T_f$. The channel is considered to be idle for $T_{short_ul}$ if both sensing slots of $T_{short_ul}$.are sensed to be idle. |
| 4.2.1.2.2 Type 2B UL channel access procedure |
| If a UE is indicated to perform Type 2B UL channel access procedures, the UE uses Type 2B UL channel access procedure for a UL transmission. The UE may transmit the transmission immediately after sensing the channel to be idle within a duration of $T_f$ = *16us*. $T_f$ includes a sensing slot that occurs within the last 9us of $T_f$. The channel is considered to be idle within the duration $T_f$ if the channel is sensed to be idle for total of at least 5us with at least 4us of sensing occurring in the sensing slot. |
| 4.2.1.2.3 Type 2C UL channel access procedure |
| If a UE is indicated to perform Type 2C UL channel access procedures for a UL transmission, the UE does not sense the channel before the transmission. The duration of the corresponding UL transmission is at most 584us. |

According to one embodiment of the present disclosure, a type 2A SL channel access may be in the same manner as a type 2A DL and/or UL channel access, with a sensing interval of T_short_sl=25us and a T_f=16us interval immediately following the sensing interval comprised of one sensing slot, where T_f comprises a sensing slot at the beginning. As for the basic idle determination, the scheme of DL or UL may also be used.

According to one embodiment of the present disclosure, a Type 2B SL channel access may be in the same manner as a Type 2B DL and/or UL channel access, with a sensing interval of T_f =16us, where T_f includes a sensing slot at the end of the 9us interval. As for the basic idle determination, the DL or UL scheme may also be used.

According to one embodiment of the present disclosure, a Type 2C SL channel access may be in the same manner as a Type 2C DL and/or UL channel access, such that no channel sensing is performed. Instead, the time interval of the SL transmission may be up to 584us.

According to one embodiment of the present disclosure, a type 1 SL channel access is performed in the same manner as a type 1 DL and/or UL channel access, wherein: i) a random integer value N is derived based on a contention window size corresponding to the priority class, ii) if the channel sensing result for a defer duration of size T_d corresponding to the priority class is an idle, the counter value is decremented to N-1 with T_sl as the unit when it is idle; and iii) if the counter value is zero, the UE may occupy the RB set or channel subject to channel sensing.

However, if some of the channel sensing results for the above T_sl interval are determined to be idle, the counter value may be maintained and channel sensing may be continued until the channel sensing results in the unit of the defer duration of size T_d again become idle. In the above, the defer duration of length T_d may be in the form of m_p consecutive T_sl after T_f=16us, where m_p is a value determined according to the priority class p, and may be a time interval in which channel sensing is performed with T_sl=9us.

According to one embodiment of the present disclosure, when a UE has occupied a channel via a Type 1 SL channel access and the UE is not ready to transmit a sidelink transmission, the UE may configure a defer duration of length T_d and a sensing interval of length T_sl immediately preceding the ready-to-transmit sidelink transmission, and if both are idle, the UE may immediately perform the sidelink transmission. Here, if any of them are busy, the UE may perform the type 1 SL channel access again.

For example, if a sidelink transmission is difficult at the end of the channel sensing (e.g., if the end of the channel sensing is after the start of the sidelink transmission), the UE may reselect the sidelink transmission resource. For example, the reselected resource may be selected in consideration of the end time of the channel sensing and/or the length of the remaining sensing interval. For example, the remaining sensing interval may be a value derived by assuming that the channel sensing is all idle.

Meanwhile, in the present disclosure, a transmitting UE (i.e., TX UE) may be a UE which transmits data to (target) receiving UE(s) (i.e., RX UE(s)). For example, the TX UE may be a UE which performs PSCCH transmission and/or PSSCH transmission. For example, the TX UE may be a UE which transmits SL CSI-RS(s) and/or a SL CSI report request indication to (target) RX UE(s). For example, the TX UE may be a UE which transmits a (pre-defined) reference signal(s) (e.g., PSSCH demodulation reference signal (DM-RS)) and/or SL (L1) RSRP report request indicator, which is/are used for SL (L1) RSRP measurement, to (target) to RX UE(s). For example, the TX UE may be a UE which transmits a (control) channel (e.g., PSCCH, PSSCH, etc.) and/or reference signal(s) (e.g., DM-RS(s), CSI-RS(s), etc.) through the (control) channel, which is/are used for SL radio link monitoring (RLM) operation(s) and/or SL radio link failure (RLF) operation(s) of (target) RX UE(s).

Meanwhile, in the present disclosure, a receiving UE (i.e., RX UE) may be a UE which transmits SL HARQ feedback to transmitting UE(s) (i.e., TX UE(s)), based on whether or not data transmitted by TX UE(s) is decoded successfully and/or whether or not a PSCCH (related to PSSCH scheduling) transmitted by TX UE(s) is detected/decoded successfully. For example, the RX UE may be a UE which performs SL CSI transmission to TX UE(s) based on SL CSI-RS(s) and/or a SL CSI report request indication received from TX UE(s). For example, the RX UE may be a UE which transmits, to TX UE(s), an SL (L1) RSRP measurement value measured based on (pre-defined) reference signal(s) and/or SL (L1) RSRP report request indication received from TX UE(s). For example, the RX UE may be a UE which transmits its own data to TX UE(s). For example, the RX UE may be a UE which performs SL RLM operation(s) and/or SL RLF operation(s) based on a (pre-configured) (control) channel and/or reference signal(s) through the (control) channel received from TX UE(s).

According to one embodiment of the present disclosure, when a receiving UE transmits SL HARQ feedback information for a PSSCH (and/or PSCCH) received from a transmitting UE, (part of) the below schemes may be considered. For example, the (part of) the corresponding schemes may be limitedly applied only if the receiving UE has successfully decoded/detected the PSCCH scheduling the PSSCH.

- option 1) transmitting NACK information only if a PSSCH decoding/reception is failed
- option 2) transmitting ACK information when a PSSCH decoding/reception is succeeded, transmitting NACK information when failed

Meanwhile, in the present disclosure, a TX UE may transmit the entirety or part of information described below to RX UE(s) through SCI(s). Herein, for example, the TX UE may transmit the entirety or part of the information described below to the RX UE(s) through a first SCI and/or a second SCI.

- PSSCH (and/or PSCCH) related resource allocation information (e.g., the number/positions of time/frequency resources, resource reservation information (e.g., period))
- SL CSI report request indicator or SL (L1) RSRP (and/or SL (L1) RSRQ and/or SL (L1) RSSI) report request indicator
- SL CSI transmission indicator (or SL (L1) RSRP (and/or SL (L1) RSRQ and/or SL (L1) RSSI) information transmission indicator)) (on a PSSCH)
- Modulation and coding scheme (MCS) information
- Transmit power information
- L1 destination ID information and/or L1 source ID information
- SL HARQ process ID information
- New data indicator (NDI) information
- Redundancy version (RV) information
- (Transmission traffic/packet related) QoS information (e.g., priority information)
- SL CSI-RS transmission indicator or information on the number of (to-be-transmitted) SL CSI-RS antenna ports
- Location information of the TX UE or location (or distance region) information of target RX UE(s) (for which SL HARQ feedback is requested)

- Reference signal (e.g., DM-RS, etc.) information related to channel estimation and/or decoding of data to be transmitted through a PSSCH. For example, the reference signal information may be information related to a pattern of a (time-frequency) mapping resource of DM-RS, rank information, antenna port index information, information on the number of antenna ports, etc.

Meanwhile, in the present disclosure, for example, a PSCCH may be replaced/substituted with at least one of a SCI, a first SCI (1$^{st}$-stage SCI), and/or a second SCI (2$^{nd}$-stage SCI), or vice versa. For example, a SCI may be replaced/substituted with at least one of a PSCCH, a first SCI, and/or a second SCI, or vice versa. For example, a PSSCH may be replaced/substituted with a second SCI and/or a PSCCH, or vice versa.

Meanwhile, in the present disclosure, for example, if SCI configuration fields are divided into two groups in consideration of a (relatively) high SCI payload size, an SCI including a first SCI configuration field group may be referred to as a first SCI or a 1$^{st}$ SCI, and an SCI including a second SCI configuration field group may be referred to as a second SCI or a 2$^{nd}$ SCI. For example, the 1$^{st}$ SCI and the 2$^{nd}$ SCI may be transmitted through different channels. For example, the transmitting UE may transmit the first SCI to the receiving UE through the PSCCH. For example, the second SCI may be transmitted to the receiving UE through an (independent) PSCCH, or may be transmitted in a piggyback manner together with data through the PSSCH.

Meanwhile, in the present disclosure, for example, "configuration" or "definition" may mean (pre-)configuration from base station(s) or network(s). For example, "configuration" or "definition" may mean resource pool specific (pre-) configuration from base station(s) or network(s). For example, base station(s) or network(s) may transmit information related to "configuration" or "definition" to UE(s). For example, base station(s) or network(s) may transmit information related to "configuration" or "definition" to UE(s) through pre-defined signaling. For example, the pre-defined signaling may include at least one of RRC signaling, MAC signaling, PHY signaling, and/or SIB.

Meanwhile, in the present disclosure, for example, "configuration" or "definition" may mean that it is designated or configured through pre-configured signaling between UEs. For example, information related to "configuration" or "definition" may be transmitted or received pre-configured signaling between UEs. For example, the pre-defined signaling may include at least one of RRC signaling, MAC signaling, PHY signaling, and/or SIB.

Meanwhile, in the present disclosure, for example, RLF may be replaced/substituted with out-of-synch (OOS) and/or in-synch (IS), or vice versa.

Meanwhile, in the present disclosure, for example, a resource block (RB) may be replaced/substituted with a subcarrier, or vice versa. For example, a packet or a traffic may be replaced/substituted with a transport block (TB) or a medium access control protocol data unit (MAC PDU) according to a transmission layer, or vice versa. For example, a code block group (CBG) may be replaced/substituted with a TB, or vice versa. For example, a source ID may be replaced/substituted with a destination ID, or vice versa. For example, an L1 ID may be replaced/substituted with an L2 ID, or vice versa. For example, the L1 ID may be an L1 source ID or an L1 destination ID. For example, the L2 ID may be an L2 source ID or an L2 destination ID.

Meanwhile, in the present disclosure, for example, operation(s) of a TX UE to reserve/select/determine retransmission resource(s) may include operation(s) of the TX UE to reserve/select/determine potential retransmission resource(s) in which actual use is determined based on SL HARQ feedback information received from RX UE(s).

Meanwhile, in the present disclosure, a sub-selection window may be replaced/substituted with a selection window and/or a pre-configured number of resource sets within the selection window, or vice versa.

Meanwhile, in the present disclosure, SL MODE 1 may refer to a resource allocation method or a communication method in which a base station directly schedules SL transmission resource(s) for a TX UE through pre-defined signaling (e.g., DCI or RRC message). For example, SL MODE 2 may refer to a resource allocation method or a communication method in which a UE independently selects SL transmission resource(s) in a resource pool pre-configured or configured from a base station or a network. For example, a UE performing SL communication based on SL MODE 1 may be referred to as a MODE 1 UE or MODE 1 TX UE, and a UE performing SL communication based on SL MODE 2 may be referred to as a MODE 2 UE or MODE 2 TX UE.

Meanwhile, in the present disclosure, for example, a dynamic grant (DG) may be replaced/substituted with a configured grant (CG) and/or a semi-persistent scheduling (SPS) grant, or vice versa. For example, the DG may be replaced/substituted with a combination of the CG and the SPS grant, or vice versa. For example, the CG may include at least one of a configured grant (CG) type 1 and/or a configured grant (CG) type 2. For example, in the CG type 1, a grant may be provided by RRC signaling and may be stored as a configured grant. For example, in the CG type 2, a grant may be provided by a PDCCH, and may be stored or deleted as a configured grant based on L1 signaling indicating activation or deactivation of the grant. For example, in the CG type 1, a base station may allocate periodic resource(s) to a TX UE through an RRC message. For example, in the CG type 2, a base station may allocate periodic resource(s) to a TX UE through an RRC message, and the base station may dynamically activate or deactivate the periodic resource(s) through a DCI.

Meanwhile, in the present disclosure, a channel may be replaced/substituted with a signal, or vice versa. For example, transmission/reception of a channel may include transmission/reception of a signal. For example, transmission/reception of a signal may include transmission/reception of a channel. For example, cast may be replaced/substituted with at least one of unicast, groupcast, and/or broadcast, or vice versa. For example, a cast type may be replaced/substituted with at least one of unicast, groupcast, and/or broadcast, or vice versa. For example, the cast or the cast type may include unicast, groupcast and/or broadcast.

Meanwhile, in the present disclosure, a resource may be replaced/substituted with a slot or a symbol, or vice versa. For example, the resource may include a slot and/or a symbol.

Meanwhile, in the present disclosure, a priority may be replaced/substituted with at least one of logical channel prioritization (LCP), latency, reliability, minimum required communication range, prose per-packet priority (PPPP), sidelink radio bearer (SLRB), a QoS profile, a QoS parameter, and/or requirement, or vice versa.

Meanwhile, in the present disclosure, for example, for convenience of description, a (physical) channel used when a RX UE transmits at least one of the following information to a TX UE may be referred to as a PSFCH.

- SL HARQ feedback, SL CSI, SL (L1) RSRP

Meanwhile, when performing sidelink communication, a method for a transmitting UE to reserve or pre-determine transmission resource(s) for receiving UE(s) may be representatively as follows.

For example, the transmitting UE may perform a reservation of transmission resource(s) based on a chain. Specifically, for example, if the transmitting UE reserves K transmission resources, the transmitting UE may transmit location information for less than K transmission resources to receiving UE(s) through a SCI transmitted to the receiving UE(s) at any (or specific) transmission time or a time resource. That is, for example, the SCI may include location information for less than the K transmission resources. Alternatively, for example, if the transmitting UE reserves K transmission resources related to a specific TB, the transmitting UE may transmit location information for less than K transmission resources to receiving UE(s) through a SCI transmitted to the receiving UE(s) at any (or specific) transmission time or a time resource. That is, the SCI may include location information for less than the K transmission resources. In this case, for example, it is possible to prevent performance degradation due to an excessive increase in payloads of the SCI, by signaling only the location information for less than K transmission resources to the receiving UE(s) through one SCI transmitted at any (or specific) transmission time or the time resource by the transmitting UE.

FIG. 15 shows a method in which a UE that has reserved transmission resource(s) informs another UE of the transmission resource(s), based on an embodiment of the present disclosure. The embodiment of FIG. 15 may be combined with various embodiments of the present disclosure.

Specifically, for example, (a) of FIG. 15 shows a method for performing by a transmitting UE chain-based resource reservation by transmitting/signaling location information of (maximum) 2 transmission resources to receiving UE(s) through one SCI, in the case of a value of K = 4. For example, (b) of FIG. 15 shows a method for performing by a transmitting UE chain-based resource reservation by transmitting/signaling location information of (maximum) 3 transmission resources to receiving UE(s) through one SCI, in the case of a value of K = 4. For example, referring to (a) and (b) of FIG. 15, the transmitting UE may transmit/signal only location information of the fourth transmission-related resource to the receiving UE(s) through the fourth (or last) transmission-related PSCCH. For example, referring to (a) of FIG. 15, the transmitting UE may transmit/signal to the receiving UE(s) not only location information of the fourth transmission-related resource but also location information of the third transmission-related resource additionally through the fourth (or last) transmission-related PSCCH. For example, referring to (b) of FIG. 15, the transmitting UE may transmit/signal to the receiving UE(s) not only location information of the fourth transmission-related resource but also location information of the second transmission-related resource and location information of the third transmission-related resource additionally through the fourth (or last) transmission-related PSCCH. In this case, for example, in (a) and (b) of FIG. 15, if the transmitting UE may transmit/signal to the receiving UE(s) only location information of the fourth transmission-related resource through the fourth (or last) transmission-related PSCCH, the transmitting UE may set or designate a field/bit of location information of unused or remaining transmission resource(s) to a pre-configured value (e.g., 0). For example, in (a) and (b) of FIG. 15, if the transmitting UE may transmit/signal to the receiving UE(s) only location information of the fourth transmission-related resource through the fourth (or last) transmission-related PSCCH, the transmitting UE may be set or designate a field/bit of location information of unused or remaining transmission resource(s) to a pre-configured status/bit value indicating/representing the last transmission (among 4 transmissions).

Meanwhile, for example, the transmitting UE may perform a reservation of transmission resource(s) based on a block. Specifically, for example, if the transmitting UE reserves K transmission resources, the transmitting UE may transmit location information for K transmission resources to receiving UE(s) through a SCI transmitted to the receiving UE(s) at any (or specific) transmission time or a time resource. That is, the SCI may include location information for K transmission resources. For example, if the transmitting UE reserves K transmission resources related to a specific TB, the transmitting UE may transmit location information for K transmission resources to receiving UE(s) through a SCI transmitted to the receiving UE(s) at any (or specific) transmission time or a time resource. That is, the SCI may include location information for K transmission resources. For example, (c) of FIG. 15 shows a method for performing by the transmitting UE block-based resource reservation, by signaling location information of 4 transmission resources to receiving UE(s) through one SCI, in the case of a value of K = 4.

According to one embodiment of the present disclosure, a plurality of candidate start positions related to an SL channel/signal transmission (attemption) (within a slot) may be configured considering LBT failures in an unlicensed band, in such cases (some or all) of the rules below may be applied. For example, the SL channel/signal may include PSSCH (and/or, PSCCH), PSFCH, S-SSB. For example, the plurality of candidate start positions may include an Nth (e.g., 1st) start time point, a (subsequent) N+1st (e.g., 2nd) start time point.

Here, for example, the Nth start point may be configured as a start time point of the slot (and/or the first symbol position configured as an SL resource in the slot). Here, for example, (some or all of) the rules below may be interpreted as being applied from the perspective of a transmitting UE (e.g., a UE performing packet transmission) (and/or a receiving UE (e.g., a UE performing packet reception)).

According to one embodiment of the present disclosure, a symbol corresponding to the N+1st (e.g., 2nd) start time point may be configured to be designated for AGC use (or, general use) if (any or all of) the conditions below are met (even if SL channel/signal transmission is performed at the Nth start time point). For example, the AGC use may mean an AGC symbol form where the later symbol is duplicated. For example, the generic use may mean a symbol form used for data information (and/or RS) mapping.

Here, for example, whether (some of) the following conditions are applied may be configured differently according to whether an (intra-cell) guard band (GB) is configured between RB sets.

For example, if no GB is configured between RB sets, then if an SL channel/signal transmission using RB sets less than the total number of M RB sets comprising the SL BWP (and/or the SL resource pool) is performed (at the Nth (e.g., 1) start time point), then the symbol corresponding to the N+1 st (e.g., 2) start time point may be used for AGC purposes (or for general purposes). And/or, for example, if no GB is configured between the RB sets, if an SL channel/signal transmission using RB sets fewer than a pre-configured threshold value and/or an SL channel/signal transmission using some RB(s) of (one) RB set is performed (at the Nth (e.g., 1) start time point), the symbols corresponding to the N+1st (e.g., 2) start time point may be used for AGC purposes (or for general purposes). And/or, for example, if no GB is configured between RB sets, if an SL channel/signal transmission using the entire M RB sets comprising the SL BWP (and/or SL resource pool) is performed (at the Nth (e.g., 1) start time point), the symbol corresponding to the N+1st (e.g., 2) start time point may be used for general purpose (or AGC purpose).

For example, if GB is configured between RB sets, the symbol corresponding to the N+1 st (e.g., 2) start time point may be used for general purpose (or AGC purpose) regardless of the number of RB sets on which SL channel/signal transmission is performed (at the Nth (e.g., 1) start time point).

FIG. 16 shows a second candidate start symbol used as an AGC symbol, based on whether a GB is configured between the entire RB sets configured in the SL BWP, according to one embodiment of the present disclosure. The embodiment of FIG. 16 may be combined with various embodiments of the present disclosure.

Referring to FIG. 16, an entire RB sets configured to an SL BWP in the frequency domain and one slot in the time domain are shown. For example, there is no guard band between the entire RB sets, and the slot may include a first candidate start symbol and a second candidate start symbol. Here, it is assumed that for the transmission based on the first candidate start symbol, a part of the entire RB sets is used.

Here, for example, based on a part of the entire RB sets being used for a transmission based on the first candidate start symbol, the second candidate start symbol may be used as an AGC symbol. This is because, if a transmission using the second candidate start symbol is performed, the transmission power for the transmission based on the second candidate start symbol may affect the transmission based on the first candidate start symbol.

FIG. 17 shows a second candidate start symbol that is not used as an AGC symbol, based on whether a GB is configured between the entire RB sets being configured to the SL BWP, according to one embodiment of the present disclosure. The embodiment of FIG. 17 may be combined with various embodiments of the present disclosure.

Referring to FIG. 17, an entire RB sets configured in the SL BWP in the frequency domain and one slot in the time domain are shown. For example, there is no guard band between the entire RB sets, and the slot may include a first candidate start symbol and a second candidate start symbol. Here, it is assumed that the entire RB sets are used for transmission based on the first candidate start symbol.

Here, for example, the second candidate start symbol may not be used as an AGC symbol, based on all of the entire RB sets being used for the transmission based on the first candidate start symbol. This may be because all of the RB sets within the SL BWP are already being used for the transmission based on the first candidate start symbol, and thus there is no need for the transmission based on the second candidate start symbol to be initiated.

FIG. 18 shows a second candidate start symbol that is not used as an AGC symbol, based on whether a GB is configured between the entire RB sets configured to the SL BWP, according to one embodiment of the present disclosure. The embodiment of FIG. 18 may be combined with various embodiments of the present disclosure.

Referring to FIG. 18, an entire RB sets configured to the SL BWP in the frequency domain and one slot in the time domain are shown. For example, there is a guard band between the entire RB sets, and the slot may include a first candidate start symbol and a second candidate start symbol. Here, it is assumed that a part of the entire RB sets is used for transmission based on the first candidate start symbol.

Here, for example, the second candidate start symbol may not be used as an AGC symbol, based on some RB sets of the entire RB sets being used for transmission based on the first candidate start symbol. This may be because, due to the presence of a guard band between the RB sets, even if a new transmission is performed at a different RB set and at the second candidate start symbol, it does not affect the transmission based on the first candidate start symbol whose transmission power has already been determined at the first candidate start symbol.

For example, whether (some of) the following conditions are applied may be configured differently according to the MCS (and/or modulation order) value/range used for PSSCH transmission.

For example, if an MCS (and/or modulation order) with a value lower than the pre-configured threshold level is used, then if an SL channel/signal transmission using RB sets fewer than the entire M RB sets comprising the SL BWP (and/or SL resource pool) is performed (at the Nth (e.g., 1) start time point), then the symbols corresponding to the N+1st (e.g., 2) start time point may be used for general (or AGC) purposes. If, for example, an MCS (and/or modulation order) with a value lower than a pre-configured threshold level is used, if an SL channel/signal transmission using fewer RB sets than a pre-configured threshold and/or an SL channel/signal transmission using some RB(s) of (one) RB set is performed, the symbols corresponding to the N+1th (e.g., 2nd) start time point may be used for general purposes (or for AGC purposes).

For example, whether (some of) the following conditions are applied may be configured differently according to whether bits related to a specific (and/or more than or equal to a pre-configured number of) code block (CB) are mapped on the symbol corresponding to the N+1st (e.g., 2) start time point more than or equal to a certain ratio.

For example, if such a phenomenon is occurring/predicted, if an SL channel/signal transmission using fewer RB sets than the entire M RB sets comprising the SL BWP (and/or the SL resource pool) is performed (at the Nth (e.g., 1) start time point), then the symbol corresponding to the N+1st (e.g., 2) start time point may be used for AGC purposes (or for general purposes). And/or, for example, if such a phenomenon is occurring/predicted, if an SL channel/signal transmission using RB sets fewer than a pre-configured threshold number of RB sets and/or an SL channel/signal transmission using some RB(s) of (one) RB set is performed, the symbol corresponding to the N+1 st (e.g., 2) start time point may be used for AGC purposes (or for general purposes).

According to some embodiments of the present disclosure, an SL channel/signal transmission using (a plurality of) RB sets fewer than the entire M RB sets comprising the SL BWP (and/or the SL resource pool) (and/or an SL channel/signal transmission using (a plurality of) RB sets fewer than a pre-configured threshold (e.g., 1), and/or an SL channel/signal transmission using some RB(s) of (one) RB set) may be performed.

Here, for example, if an SL channel/signal transmission using the entire M RB sets comprising the SL BWP (and/or the SL resource pool) (and/or an SL channel/signal transmission using (a plurality of) RB sets above or equal to a pre-configured threshold) is performed, it may be interpreted that the symbol corresponding to the N+1 st (e.g., 2nd) start time point (even if an SL channel/signal transmission is performed at the Nth start time point) is designated as a generic use (or, an AGC use). For example, the AGC use may mean an ACG symbol form in which the later symbols are duplicated. For example, the generic use may mean a symbol form used for mapping data information (and/or RS).

For example, it may be configured such that a receiving UE, after decoding the SCI (e.g., 1st SCI), if a PSSCH it schedules is an SL channel/signal transmission using (a plurality of) RB sets fewer than the entire M RB sets comprising the SL BWP (and/or the SL resource pool) (and/or an SL channel/signal transmission using (a plurality of) RB sets fewer than or equal to a preconfigured threshold (e.g., 1) and/or an SL channel/signal transmission using a plurality of RB sets and/or an SL channel/signal transmission using some of the RB(s) of (one) RB set), assumes/use the symbol corresponding to the N+1st (e.g., 2nd) start time point for AGC use (or general use).

For example, a receiving UE may be configured to assume/use a symbol corresponding to N+1 th (e.g., 2nd) start time point for AGC purpose (or, a general purpose) if, after decoding the SCI (e.g., 1st SCI), a PSSCH it schedules is an SL channel/signal transmission using (a plurality of) RB sets fewer than the entire M RB sets comprising the SL BWP (and/or, an SL resource pool) (and/or, an SL channel/signal transmission using (a plurality of) RB sets fewer than or equal to a pre-configured threshold (e.g., 1), and/or, an SL channel/signal transmission using some RB(s) of (one) RB set).

And/or, for example, a receiving UE may be configured to assume/use the symbol corresponding to the N+1th (e.g., 2nd) start time point for AGC purpose (or, general purpose) if, after decoding the SCI (e.g., 1st SCI), a PSSCH it schedules is an SL channel/signal transmission using the entire M RB sets comprising the SL BWP (and/or, SL resource pool) (and/or, an SL channel/signal transmission using (a plurality of) RB sets more than or equal to a pre-configured threshold value).

Here, for example, the decoded SCI (e.g., 1st SCI) used for this purpose may (or may not) be limited to those transmitted by a transmitting UE that transmits packets related to the service that the receiving UE is interested in.

For example, a UE (e.g., a transmitting UE) may, when selecting/reserving resources for SL channel/signal transmission based on the Nth (e.g., 1st) start time point (or, the N+1st (e.g., 2) start time point), select/reserve (at most) resources on (a plurality of) RB sets more than equal to(or, less than or equal to) a pre-configured threshold (e.g., 2) (and/or resources on the entire M RB sets comprising the SL BWP (and/or, the SL resource pool)). For example, the UE may (at most or preferentially) select (one or more) sub-channels located on the corresponding RB set(s). Here, for example, such constraints/limitations may not be applied when selecting/reserving resources for SL channel/signal transmission based on the N+1st (e.g., 2nd) start time point (or, the Nth (e.g., 1st) start time point). For example, the SL channel/signal may include PSSCH (and/or, PSCCH), PSFCH, S-SSB.

For example, it may be configured so that the start position (in the slot) used in the (one TB-related) initial transmission (and/or the previous (re)transmission and/or the pre-configured Kth (re)transmission) is equally used/-maintained in subsequent retransmissions. Further, for example, it may be configured so that the above operations are performed/applied independently between different TB-related transmissions. And/or, for example, it may be configured so that a specific TB-related transmission start position (start symbol position) is applied equally for different TB-related transmissions. For example, if a single SL grant is selected/reserved for multiple TB transmissions, it may be configured so that a specific TB-related transmission start position (start symbol position) is equally applied for different TB-related transmissions.

For example, a UE (e.g., transmitting UE, receiving UE) may, after decoding a SCI (e.g., 1st SCI) (transmitted by another transmitting UE), and after determine the number (and/or frequency resource region/size) of RB sets occupied by the PSSCH it is scheduling, and (finally) determine whether the symbol corresponding to the N+1st (e.g., 2nd) start time point (related to the PSSCH it is attempting to receive) is to be used for general or AGC purposes. For example, the AGC purpose may be in the form of an ACG symbol with the backward symbol duplicated. For example, the general purpose use may mean a symbol form used for mapping data information (and/or RS).

For example, when a resource pool in the form of FDM is configured on a plurality of RB sets in an unlicensed band (within the SL BWP), the (time resource related) parameters such as PSFCH resource related periodicity (and/or slot offset) (and/or frequency resource related parameters (e.g., PSFCH RB set location/amount)) may be configured/limit equally between the different resource pools.

For example, when a multiple slot-based consecutive transmission form (e.g., with a gap of 16 msec or 16 usec or less) is performed in an unlicensed band, (only) the transmission start symbol on the first (and/or the pre-configured Lth) slot may be configured to be designated/used for AGC purposes (or, for general purposes). For example, said multiple slot-based consecutive transmission form may include a multiple consecutive slot transmission (MCSt) form.

For example, whether or not the above rules are applied (and/or the values of the parameters related to the proposed schemes/rules of this disclosure) may be configured/enabled (and/or the application of the above rules may be configured/enabled limitedly) specifically (or, differently, or, independently), for at least one among elements/parameters of (or per), a service type (and/or a (LCH or service) priority and/or a QOS requirement (e.g., latency, reliability, minimum communication range) and/or a PQI parameter) (and/or a HARQ enabled (and/or disabled) LCH/MAC PDU (transmission) and/or a CBR measurement value of a resource pool and/or SL cast type (e.g., unicast, groupcast, broadcast) and/or an SL groupcast HARQ feedback option (e.g., a NACK only feedback, an ACK/NACK feedback, a TX-RX distance based NACK only feedback) and/or an SL MODE 1 CG type (e.g., SL CG type 1/2) and/or an SL mode type (e.g., mode 1/2) and/or a resource pool and/or whether it is a resource pool in which a PSFCH resource is configured and/or a case in which a periodic resource reservation operation (and/or an aperiodic resource reservation operation) is enabled/configured (or not enabled/configured) on a resource pool and/or a case in which a partial sensing operation (and/or a random resource selection operation (and/or a full sensing operation)) is enabled/configured (or not enabled/configured) on a resource pool and/or a source (L2) ID (and/or destination (L2) ID) and/or a PC5 RRC connection link and/or an SL link and/or a connection state (with a base station) (e.g., RRC CONNECTED state, IDLE state, INACTIVE state) and/or an SL HARQ process (ID) and/or whether it is an SL DRX operation is performed (of a transmitting UE or a receiving UE) and/or whether it is a power saving (transmitting or receiving) UE and/or a case where a PSFCH TX and a PSFCH RX (and/or a plurality of PSFCH transmissions (whose UE capability is exceeded)) overlaps (and/or a case where a PSFCH transmission (and/or a PSFCH reception) is omitted) (in the perspective of a specific UE) and/or a case where a receiving UE (successively) actually received from a transmitting UE a PSCCH (and/or PSSCH) (re)transmission and/or a case where a (transmitting) UE performing a packet transmission (and/or transmission resource (re)selection) performs a power saving operation (and/or an SL DRX operation) and/or a case where a target (receiving) UE of a transmission packet performs a power saving operation (and/or an SL DRX operation) and/or a case where a remaining PDB value related to a transmission packet is greater than equal to a pre-configured threshold value (or less than or equal to) and/or a case of an initial transmission (and/or a retransmission) (related to a TB) and/or a case where an interlace based structure (RB) is applied and/or a case where (pre-configured) channel access type (e.g., type 1, type 2A, type 2B, type 2C, semi-static channel occupancy) is performed and/or a case where a transmission/reception of an (pre-configured) SL channel/signal (e.g., SL SSB, PSCCH, PSSCH, PSFCH) is performed and/or an RB set (and/or a channel and/or a carrier) (for which a channel access operation is performed in an unlicensed band) and/or COT(channel occupancy time) and/or a TX burst and/or a discovery burst), and/or an SL channel/signal transmission using entire M RB sets comprising an SL BWP (and/or SL resource pool) (and/or a case an SL channel/signal transmission using the number less than the entire M RB sets of RB sets comprising an SL BWP (and/or SL resource pool) and/or an SL channel/signal transmission using the number less than (or greater than) a pre-configured threshold value of RB sets and/or an SL channel/signal transmission using a part of RB(s) of (one) RB set is performed), etc. In addition, a combination of the proposed schemes (and/or proposed rules and/or embodiments) described in this disclosure may be applied.

Furthermore, the word "configuration" (or "designation") in this disclosure may be broadly interpreted to a form of informing a UE through a predefined (physical layer or higher layer) channel/signal (e.g., SIB, RRC, MAC CE) (and/or, a form being supporting through a pre-configuration, and/or, a form of informing another UE through a predefined (physical layer or higher layer) channel/signal (e.g., SL MAC CE, PC5 RRC)), etc.

In addition, the "PSFCH" wording in this disclosure may be (inter) expanded interpreted as "(NR or LTE) PSSCH (and/or (NR or LTE) PSCCH) (and/or (NR or LTE) SL SSB (and/or UL channel/signal))".

Further, the proposed schemes in this disclosure may be combined with each other and extended (into new forms of schemes) to be used. Furthermore, in this disclosure, the wording "active time" (and/or "on-duration") wording in this disclosure may be (inter) expanded interpreted as "on-duration" (and/or "active time").

According to one embodiment of the present disclosure, the scheme for determining a contention window size may be a scheme where a plurality of schemes are mixed and matched. For example, the scheme may be a scheme that, when there are multiple SL HARQ-ACK feedback groups referenced, the result determined based on a representative HARQ-ACK value of each group maintains the $CW_p$ value for all or each CAPC and/or a scheme that increases the $CW_p$ value for all or each CAPC to the next allowable value if the result is not to initialize to the initial value.

For example, if there are multiple factors referenced in configuring the contention window size, and if a result that increases the $CW_p$ value to the next allowable value and maintaining or initializing the $CW_p$ value occur simultaneously as a result of the determination of each factor, the $CW_p$ value may be maintained and/or the $CW_p$ value may be initialized to a minimum value.

For example, if there are multiple factors that are referenced in configuring the contention window size, and if a result that increases the $CW_p$ value to the next allowable value and maintaining or initializing the $CW_p$ value occur simultaneously as a result of the determination of each factor, the $CW_p$ value may be increased to the next allowable value.

According to one embodiment of the present disclosure, the PSCCH/PSSCH referenced to determine the contention window size may be received within a specific time interval. For example, the specific time interval may exist within the earliest SL channel occupancy interval after the UE last updated its $CW_p$.

According to one embodiment of the present disclosure, an operation in which $CW_p$ is initialized to a minimum value may be replaced by another specific value (e.g., a (pre-)configured value), and/or the specific value may be configured differently according to factors that control the size of the contention window.

In various embodiments of the present disclosure, for example, The reference duration may be an interval i) from the start of channel occupancy for a COT occupied by a UE (for sidelink communication) and/or a COT occupied by a base station (for sidelink communication) to the end of the first slot in which an actual specific sidelink transmission is performed for all allocated resources for sidelink transmission, or ii) to the end of the first transmission burst including an actual specific sidelink transmission for all allocated resources for sidelink transmission, or iii) to an earlier time point between the above end points. For example, the specific sidelink transmission may be a PSCCH/PSSCH transmission for unicast and/or groupcast and/or PSCCH/PSSCH with SL HARQ-ACK feedback enabled. For example, the length of the reference interval may be (pre-)configured per resource pool and/or per SL priority value of the SL transmission of a UE when the COT is initialized.

In various embodiments of the present disclosure, different combinations of the above may be used, for example, according to whether the COT duration is initialized by a UE or a base station.

In various embodiments of the present disclosure, for example, adjusting the size of the contention window for sidelink may be performed per unicast session (group) and/or per cast type and/or per transmission priority value and/or per SL transmission with SL HARQ-ACK feedback enabled/disabled and/or per SL HARQ-ACK feedback option, respectively. For example, the processes of adjusting the size of the contention window may be performed for each case of a first UE transmitting an SL to a second UE and transmitting an SL to a third UE, respectively . For example, when adjusting the size of the contention window based on HARQ-ACK, the HARQ-ACK may be limited to a specific cast type and/or a specific unicast session.

In various embodiments of the present disclosure, for example, adjusting the size of the contention window for sidelink may be performed only based on a specific cast type (e.g., unicast or group cast) and/or PSSCH with SL HARQ-ACK feedback enabled.

In various embodiments of the present disclosure, for example, initializing the value of CW_p to the respective minimum value may be applied by replacing it with decreasing the value of CW_p to the previous allowable value.

For example, when accessing a TYPE 1 SL channel, the size of the contention window may be (pre-)configured per priority class and/or per SL priority and/or per resource pool. For example, in any of the above cases, an operation to separately adjust the size of the contention window may not be performed by the UE.

In various embodiments of the present disclosure, for example, in a channel sensing operation according to a channel access type, a threshold value for determining whether a channel is busy or idle may be (pre-)configured, and/or predefined per resource pool, and/or per SL BWP, and/or per an RB set, and/or per a carrier, and/or per an SL transmit priority, and/or per a representative transmit power value (range), and/or per a congestion control level.

Various embodiments of the present disclosure may be applied in different combinations of the above, for example, depending on whether the transmissions are within or outside the COT (channel occupancy time). Various embodiments of the present disclosure may be applied in the different combinations differently according to the form of the COT (e.g., semi-static or time-varying). For example, in a semi-static COT, the absence of other technologies sharing the same channel or RB set may be guaranteed for a period of time, such as by regulation. For example, in the semi-static COT for SL transmission, the absence of DL and/or UL transmissions sharing the same channel or RB set for a certain period of time may be guaranteed, such as by regulation. For example, in the semi-static COT, the absence of SL transmission sharing the same channel or RB set may be guaranteed for a certain period of time, such as for DL and/or UL transmission. For example, in the semi-static COT, the absence of SL transmissions based on SL mode 2 resource (re)selection sharing the same channel or RB set for a certain period of time may be guaranteed, such as by regulation.

For example, the length of the fixed-frame period (FFP) and/or the time axis offset value for the semi-static COT duration may be (pre-)configured per resource pool and/or per SL BWP and/or per carrier and/or per an RB set and/or per congestion control level and/or per SL transmit priority value. For example, the length of the fixed-frame period (FFP) and/or the time axis offset value for the semi-static COT duration may be configured via PC5-RRC signaling between UEs. For example, the (pre-)configured FFP may be overwritten via the PC5-RRC signaling. For example, the FFP configured to the PC5-RRC may be used limitedly for unicast transmission corresponding to the PC5-RRC connection. Various embodiments of the present disclosure may be applied in the form of different combinations of the above, according to different carriers, with or without guards between RB sets, or according to regulations.

While various embodiments of the present disclosure describe changing the contention window size for all CAPCs, the ideas of the present disclosure may be extended to include changing the contention window size per specific CAPC or SL priority value.

In various embodiments of the present disclosure, for example, the scheme may be applied differently per SL channel, depending on the type of channel access and whether/how it is indicated. In various embodiments of the present disclosure, for example, with respect to the type of channel access and whether/how to indicate, the above scheme may be applied differently depending on the type of information included in the SL channel.

For example, the proposed method may be applied to devices described below. First, a processor 202 of a receiving UE may configure at least one BWP. Then, the processor 202 of the receiving UE may control a transceiver 206 of the receiving UE to receive a sidelink-related physical channel and/or a sidelink-related reference signal from the transmitting UE over the at least one BWP.

For example, in (mode 1 and mode 2) resource allocation in SL-U, if a plurality of start symbols are introduced in an SL transmission based on a slot (or mini-slot), the AGC overhead and PSCCH decoding complexity may increase. Also, within the same slot, for example, an SL transmission started at an earlier start symbol may block an SL transmission started at a later start symbol.

For example, in an unlicensed band, an LBT operation may be performed to secure a transmission opportunity. For example, channel sensing for a channel access procedure (CAP) may include the LBT operation.

For example, an LBT operation is an operation to perform channel sensing in a certain interval (contention window) before the resource where transmission is to be attempted, and then perform transmission based on that resource only if the result is IDLE. For example, in SL-U, an LBT operation may be performed in units of RB sets.

In an unlicensed band, there may be two starting symbols in a slot considering an LBT operation. A plurality of (e.g., two) candidate starting symbols capable of performing LBT may be configured on a slot in order to quickly provide an opportunity to re-perform LBT when LBT fails (e.g., to reduce packet transmission delay). Here, for example, when performing a first candidate start symbol position-based transmission, if the symbol corresponding to the second candidate start symbol position is always used as a symbol for AGC purpose (e.g., an ACG symbol generated by duplicating the latter symbol), unnecessary resource loss may occur when the receiving UE does not actually need to perform additional AGC operations on the second candidate start symbol position (i.e., the second start symbol that could be used for transmission is used as an AGC symbol). This means that the number of symbols that can be used for data/reference signal mapping may be reduced.

To address the above problem, for example, when there are a plurality of start symbols in a slot, a transmitting UE may determine whether to use the second start symbol as an AGC symbol or as a general transmission symbol, considering the number of RB sets used for transmission and/or whether there is a guard band between the RB sets, etc.

Specifically, for example, if a plurality of candidate start symbol positions (e.g., 2) capable of performing LBT on a slot are configured, according to whether a pre-configured condition is met, it may be determined whether the symbol corresponding to the second candidate start symbol position is used as a general purpose symbol (e.g., a symbol used for mapping data/reference signals) or as an AGC symbol (e.g., an ACG symbol generated by duplicating a backward symbol) when performing a transmission based on the first candidate start symbol position.

Here, the pre-configured condition may include whether the transmission based on all or some of the RB sets comprising the resource pool (and/or SL BWP) is performed. For example, if a transmission based on the entire RB sets is performed at the first candidate start symbol (in which case the transmission based on the second candidate start symbol position and the transmissions of other UEs may be relatively less likely to be FDMed), then the symbol corresponding to the second candidate start symbol position may be used as a general purpose symbol. On the other hand, for example, if a transmission based on some RB set is performed at the first candidate start symbol (in which case the probability that a transmission based on the second candidate start symbol position and a transmission from a different UE is FDMed may be relatively higher), the symbol corresponding to the second candidate start symbol position may be used as a symbol for AGC purpose. Furthermore, for example, the application of the above rules may be limited to cases where guard bands are configured between RB sets (intra-cell).

FIG. 19 shows a procedure for a first device to perform wireless communication, according to one embodiment of the present disclosure. The embodiment of FIG. 19 may be combined with various embodiments of the present disclosure.

Referring to FIG. 19, in step S1910, a first device may obtain information for a first candidate start symbol and a second candidate start symbol. For example, the first candidate start symbol and the second candidate start symbol may be included in a first slot. In step S1920, the first device may obtain information related to a resource block (RB) set configured to a sidelink (SL) bandwidth part (BWP). In step S1930, the first device may determine whether to use the second candidate start symbol as an automatic gain control (ACG) symbol, based on the information related to an RB set. In step S1940, the first device may transmit, to a second device, sidelink control information (SCI) for scheduling of a physical sidelink shared channel (PSSCH) through a physical sidelink control channel (PSCCH), based on the first slot. In step S1950, the first device may transmit, to the second device, a medium access control (MAC) protocol data unit (PDU) through the PSSCH, based on the first slot.

For example, the second candidate start symbol may be used as an AGC symbol, based on not all of entire RB sets configured to the SL BWP being used for a transmission related to the first candidate start symbol.

For example, the second candidate start symbol may be not used as an AGC symbol, based on all of entire RB sets configured to the SL BWP being used for a transmission related to the first candidate start symbol.

For example, the second candidate start symbol may be determined not to be used an AGC symbol, and the second candidate start symbol may be used for the transmission of the MAC PDU.

For example, the information related to an RB set may include information related to whether a guard band between entire RB sets configured to the SL BWP is configured.

For example, the second candidate start symbol may be used as an AGC symbol, based on the guard band being not configured and not all of the entire RB sets being used for a transmission related to the first candidate start symbol.

For example, the second candidate start symbol may be not used as an AGC symbol, based on the guard band being not configured and all of the entire RB sets being used for a transmission related to the first candidate start symbol.

For example, the second candidate start symbol may be not used as an AGC symbol, based on the guard band being configured.

For example, whether the second candidate start symbol is used as an AGC symbol may be determined based on a modulation and coding scheme (MCS) value related to the transmission of the MAC PDU.

For example, whether the second candidate start symbol is used as an AGC symbol may be determined based on a modulation order related to the transmission of the MAC PDU.

For example, whether the second candidate start symbol is used as an AGC symbol may be determined based on whether bits related to a coding block (CB) are mapped to the second candidate start symbol more than or equal to a threshold number.

For example, the transmission of the MAC PDU may be an initial transmission, and whether the second candidate start symbol is used as an AGC symbol may be equally applied to a second slot in which a retransmission of the MAC PDU is performed.

For example, the second candidate start symbol may be not used as an AGC symbol, based on a transmission performed based on the first slot being related to a multiple consecutive slot transmission (MCSt).

The embodiments described above may be applied to various devices described below. First, a processor 102 of a first device 100 may obtain information for a first candidate start symbol and a second candidate start symbol. For example, the first candidate start symbol and the second candidate start symbol may be included in a first slot. And, the processor 102 of the first device 100 may obtain information related to a resource block (RB) set configured to a sidelink (SL) bandwidth part (BWP). And, the processor 102 of the first device 100 may determine whether to use the second candidate start symbol as an automatic gain control (ACG) symbol, based on the information related to an RB set. And, the processor 102 of the first device 100 may control a transceiver 106 to transmit, to a second device 200, sidelink control information (SCI) for scheduling of a physical sidelink shared channel (PSSCH) through a physical sidelink control channel (PSCCH), based on the first slot. And, the processor 102 of the first device 100 may control the transceiver 106 to transmit, to the second device 200, a medium access control (MAC) protocol data unit (PDU) through the PSSCH, based on the first slot.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: obtaining information for a first candidate start symbol and a second candidate start symbol, wherein the first candidate start symbol and the second candidate start symbol may be included in a first slot; obtaining information related to a resource block (RB) set configured to a sidelink (SL) bandwidth part (BWP); determining whether to use the second candidate start symbol as an automatic gain control (ACG) symbol, based on the information related to an RB set; transmitting, to a second device, sidelink control information (SCI) for scheduling of a physical sidelink shared channel (PSSCH) through a physical sidelink control channel (PSCCH), based on the first slot; and transmitting, to the second device, a medium access control (MAC) protocol data unit (PDU) through the PSSCH, based on the first slot.

For example, the second candidate start symbol may be used as an AGC symbol, based on not all of entire RB sets configured to the SL BWP being used for a transmission related to the first candidate start symbol.

For example, the second candidate start symbol may be not used as an AGC symbol, based on all of entire RB sets configured to the SL BWP being used for a transmission related to the first candidate start symbol.

For example, the second candidate start symbol may be determined not to be used an AGC symbol, and the second candidate start symbol may be used for the transmission of the MAC PDU.

For example, the information related to an RB set may include information related to whether a guard band between entire RB sets configured to the SL BWP is configured.

For example, the second candidate start symbol may be used as an AGC symbol, based on the guard band being not configured and not all of the entire RB sets being used for a transmission related to the first candidate start symbol.

For example, the second candidate start symbol may be not used as an AGC symbol, based on the guard band being not configured and all of the entire RB sets being used for a transmission related to the first candidate start symbol.

For example, the second candidate start symbol may be not used as an AGC symbol, based on the guard band being configured.

For example, whether the second candidate start symbol is used as an AGC symbol may be determined based on a modulation and coding scheme (MCS) value related to the transmission of the MAC PDU.

For example, whether the second candidate start symbol is used as an AGC symbol may be determined based on a modulation order related to the transmission of the MAC PDU.

For example, whether the second candidate start symbol is used as an AGC symbol may be determined based on whether bits related to a coding block (CB) are mapped to the second candidate start symbol more than or equal to a threshold number.

For example, the transmission of the MAC PDU may be an initial transmission, and whether the second candidate start symbol is used as an AGC symbol may be equally applied to a second slot in which a retransmission of the MAC PDU is performed.

For example, the second candidate start symbol may be not used as an AGC symbol, based on a transmission performed based on the first slot being related to a multiple consecutive slot transmission (MCSt).

According to an embodiment of the present disclosure, a device adapted to control a first user equipment (UE) may be proposed. For example, the device may comprise: at least one processor; and at least one memory operably connected to the at least one processor and storing instructions that, based on being executed by the at least one processor, cause the first UE to perform operations. For example, the operations may comprise: obtaining information for a first candidate start symbol and a second candidate start symbol, wherein the first candidate start symbol and the second candidate start symbol may be included in a first slot; obtaining information related to a resource block (RB) set configured to a sidelink (SL) bandwidth part (BWP); determining whether to use the second candidate start symbol as an automatic gain control (ACG) symbol, based on the information related to an RB set; transmitting, to a second UE, sidelink control information (SCI) for scheduling of a physical sidelink shared channel (PSSCH) through a physical sidelink control channel (PSCCH), based on the first slot; and transmitting, to the second UE, a medium access control (MAC) protocol data unit (PDU) through the PSSCH, based on the first slot.

According to an embodiment of the present disclosure, a non-transitory computer-readable storage medium storing instructions may be proposed. For example, the instructions, based on being executed, may cause a first device to: obtain information for a first candidate start symbol and a second candidate start symbol, wherein the first candidate start symbol and the second candidate start symbol may be included in a first slot; obtain information related to a resource block (RB) set configured to a sidelink (SL) bandwidth part (BWP); determine whether to use the second candidate start symbol as an automatic gain control (ACG) symbol, based on the information related to an RB set; transmit, to a second device, sidelink control information (SCI) for scheduling of a physical sidelink shared channel (PSSCH) through a physical sidelink control channel (PSCCH), based on the first slot; and transmit, to the second device, a medium access control (MAC) protocol data unit (PDU) through the PSSCH, based on the first slot.

FIG. 20 shows a procedure for a second device to perform wireless communication, according to one embodiment of the present disclosure. The embodiment of FIG. 20 may be combined with various embodiments of the present disclosure.

Referring to FIG. 20, in step S2010, a second device may receive, from a first device, sidelink control information (SCI) for scheduling of a physical sidelink shared channel (PSSCH) through a physical sidelink control channel (PSCCH), based on a first slot. In step S2020, the second device may receive, from the first device, a medium access control (MAC) protocol data unit (PDU) through the PSSCH, based on the first slot. For example, the first slot may include a first candidate start symbol and a second candidate start symbol, and whether the second candidate start symbol is used as an automatic gain control (AGC) symbol may be determined based on information related to a resource block (RB) set configured to a sidelink (SL) bandwidth part (BWP).

For example, the second candidate start symbol may be used as an AGC symbol, based on not all of entire RB sets configured to the SL BWP being used for a transmission related to the first candidate start symbol.

The embodiments described above may be applied to various devices described below. First, a processor 202 of a second device 200 may control a transceiver 206 to receive, from a first device 100, sidelink control information (SCI) for scheduling of a physical sidelink shared channel (PSSCH) through a physical sidelink control channel (PSCCH), based on a first slot. And, the processor 202 of the second device 200 may control the transceiver 206 to receive, from the first device 100, a medium access control (MAC) protocol data unit (PDU) through the PSSCH, based on the first slot. For example, the first slot may include a first candidate start symbol and a second candidate start symbol, and whether the second candidate start symbol is used as an automatic gain control (AGC) symbol may be determined based on information related to a resource block (RB) set configured to a sidelink (SL) bandwidth part (BWP).

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, sidelink control information (SCI) for scheduling of a physical sidelink shared channel (PSSCH) through a physical sidelink control channel (PSCCH), based on a first slot; and receiving, from the first device, a medium access control (MAC) protocol data unit (PDU) through the PSSCH, based on the first slot, wherein the first slot may include a first candidate start symbol and a second candidate start symbol, and wherein whether the second candidate start symbol is used as an automatic gain control (AGC) symbol may be determined based on information related to a resource block (RB) set configured to a sidelink (SL) bandwidth part (BWP).

For example, the second candidate start symbol may be used as an AGC symbol, based on not all of entire RB sets configured to the SL BWP being used for a transmission related to the first candidate start symbol.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

FIG. 21 shows a communication system 1, based on an embodiment of the present disclosure. The embodiment of FIG. 21 may be combined with various embodiments of the present disclosure.

Referring to FIG. 21, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 22 shows wireless devices, based on an embodiment of the present disclosure. The embodiment of FIG. 22 may be combined with various embodiments of the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 23 shows a signal process circuit for a transmission signal, based on an embodiment of the present disclosure. The embodiment of FIG. 23 may be combined with various embodiments of the present disclosure.

Referring to FIG. 23, a signal processing circuit 1000 may include scramblers 1010, modulators 1020, a layer mapper 1030, a precoder 1040, resource mappers 1050, and signal generators 1060. An operation/function of FIG. 23 may be performed, without being limited to, the processors 102 and 202 and/or the transceivers 106 and 206 of FIG. 22. Hardware elements of FIG. 23 may be implemented by the processors 102 and 202 and/or the transceivers 106 and 206 of FIG. 22. For example, blocks 1010 to 1060 may be implemented by the processors 102 and 202 of FIG. 22. Alternatively, the blocks 1010 to 1050 may be implemented by the processors 102 and 202 of FIG. 22 and the block 1060 may be implemented by the transceivers 106 and 206 of FIG. 22.

Codewords may be converted into radio signals via the signal processing circuit 1000 of FIG. 23. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 23. For example, the wireless devices (e.g., 100 and 200 of FIG. 22) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

FIG. 24 shows another example of a wireless device, based on an embodiment of the present disclosure. The wireless device may be implemented in various forms according to a use-case/service (refer to FIG. 21). The embodiment of FIG. 24 may be combined with various embodiments of the present disclosure.

Referring to FIG. 24, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 24, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 24 will be described in detail with reference to the drawings.

FIG. 25 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 25 may be combined with various embodiments of the present disclosure.

Referring to FIG. 25, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 24, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

FIG. 26 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 26 may be combined with various embodiments of the present disclosure.

Referring to FIG. 26, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 24, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:

   obtaining information for a first candidate start symbol and a second candidate start symbol,
   wherein the first candidate start symbol and the second candidate start symbol are included in a first slot;
   obtaining information related to a resource block (RB) set configured to a sidelink (SL) bandwidth part (BWP);
   determining whether to use the second candidate start symbol as an automatic gain control (ACG) symbol, based on the information related to an RB set;
   transmitting, to a second device, sidelink control information (SCI) for scheduling of a physical sidelink shared channel (PSSCH) through a physical sidelink control channel (PSCCH), based on the first slot; and
   transmitting, to the second device, a medium access control (MAC) protocol data unit (PDU) through the PSSCH, based on the first slot.

2. The method of claim 1, wherein the second candidate start symbol is used as an AGC symbol, based on not all of entire RB sets configured to the SL BWP being used for a transmission related to the first candidate start symbol.

3. The method of claim 1, wherein the second candidate start symbol is not used as an AGC symbol, based on all of entire RB sets configured to the SL BWP being used for a transmission related to the first candidate start symbol.

4. The method of claim 1, wherein the second candidate start symbol is determined not to be used an AGC symbol, and wherein the second candidate start symbol is used for the transmission of the MAC PDU.

5. The method of claim 1, wherein the information related to an RB set includes information related to whether a guard band between entire RB sets configured to the SL BWP is configured.

**6.** The method of claim 5, wherein the second candidate start symbol is used as an AGC symbol, based on the guard band being not configured and not all of the entire RB sets being used for a transmission related to the first candidate start symbol.

**7.** The method of claim 5, wherein the second candidate start symbol is not used as an AGC symbol, based on the guard band being not configured and all of the entire RB sets being used for a transmission related to the first candidate start symbol.

**8.** The method of claim 5, wherein the second candidate start symbol is not used as an AGC symbol, based on the guard band being configured.

**9.** The method of claim 1, wherein whether the second candidate start symbol is used as an AGC symbol is determined based on a modulation and coding scheme (MCS) value related to the transmission of the MAC PDU.

**10.** The method of claim 1, wherein whether the second candidate start symbol is used as an AGC symbol is determined based on a modulation order related to the transmission of the MAC PDU.

**11.** The method of claim 1, wherein whether the second candidate start symbol is used as an ACG symbol is determined based on whether bits related to a coding block (CB) are mapped to the second candidate start symbol more than or equal to a threshold number.

**12.** The method of claim 1, wherein the transmission of the MAC PDU is an initial transmission, and
wherein whether the second candidate start symbol is used as an AGC symbol is equally applied to a second slot in which a retransmission of the MAC PDU is performed.

**13.** The method of claim 1, wherein the second candidate start symbol is not used as an AGC symbol, based on a transmission performed based on the first slot being related to a multiple consecutive slot transmission (MCSt).

**14.** A first device for performing wireless communication, the first device comprising:

at least one transceiver;
at least one processor; and
at least one memory operably connected to the at least one processor and storing instructions that, based on being executed by the at least one processor, cause the first device to perform operations,
wherein the operations comprise:

obtaining information for a first candidate start symbol and a second candidate start symbol,
wherein the first candidate start symbol and the second candidate start symbol are included in a first slot;
obtaining information related to a resource block (RB) set configured to a sidelink (SL) bandwidth part (BWP);
determining whether to use the second candidate start symbol as an automatic gain control (ACG) symbol, based on the information related to an RB set;
transmitting, to a second device, sidelink control information (SCI) for scheduling of a physical sidelink shared channel (PSSCH) through a physical sidelink control channel (PSCCH), based on the first slot; and
transmitting, to the second device, a medium access control (MAC) protocol data unit (PDU) through the PSSCH, based on the first slot.

**15.** A device adapted to control a first user equipment (UE), the device comprising:

at least one processor; and
at least one memory operably connected to the at least one processor and storing instructions that, based on being executed by the at least one processor, cause the first UE to perform operations,
wherein the operations comprise:

obtaining information for a first candidate start symbol and a second candidate start symbol,
wherein the first candidate start symbol and the second candidate start symbol are included in a first slot;
obtaining information related to a resource block (RB) set configured to a sidelink (SL) bandwidth part (BWP);
determining whether to use the second candidate start symbol as an automatic gain control (ACG) symbol, based on the information related to an RB set;

transmitting, to a second UE, sidelink control information (SCI) for scheduling of a physical sidelink shared channel (PSSCH) through a physical sidelink control channel (PSCCH), based on the first slot; and
transmitting, to the second UE, a medium access control (MAC) protocol data unit (PDU) through the PSSCH, based on the first slot.

**16.** A non-transitory computer-readable storage medium storing instructions that, based on being executed, cause a first device to:

obtain information for a first candidate start symbol and a second candidate start symbol,
wherein the first candidate start symbol and the second candidate start symbol are included in a first slot;
obtain information related to a resource block (RB) set configured to a sidelink (SL) bandwidth part (BWP);
determine whether to use the second candidate start symbol as an automatic gain control (ACG) symbol, based on the information related to an RB set;
transmit, to a second device, sidelink control information (SCI) for scheduling of a physical sidelink shared channel (PSSCH) through a physical sidelink control channel (PSCCH), based on the first slot; and
transmit, to the second device, a medium access control (MAC) protocol data unit (PDU) through the PSSCH, based on the first slot.

**17.** A method for performing, by a second device, wireless communication, the method comprising:

receiving, from a first device, sidelink control information (SCI) for scheduling of a physical sidelink shared channel (PSSCH) through a physical sidelink control channel (PSCCH), based on a first slot; and
receiving, from the first device, a medium access control (MAC) protocol data unit (PDU) through the PSSCH, based on the first slot,
wherein the first slot includes a first candidate start symbol and a second candidate start symbol, and
wherein whether the second candidate start symbol is used as an automatic gain control (AGC) symbol is determined based on information related to a resource block (RB) set configured to a sidelink (SL) bandwidth part (BWP).

**18.** The method of claim 17, wherein the second candidate start symbol is used as an AGC symbol, based on not all of entire RB sets configured to the SL BWP being used for a transmission related to the first candidate start symbol.

**19.** A second device for performing wireless communication, the second device comprising:

at least one transceiver;
at least one processor; and
at least one memory operably connected to the at least one processor and storing instructions that, based on being executed by the at least one processor, cause the second device to perform operations,
wherein the operations comprise:

receiving, from a first device, sidelink control information (SCI) for scheduling of a physical sidelink shared channel (PSSCH) through a physical sidelink control channel (PSCCH), based on a first slot; and
receiving, from the first device, a medium access control (MAC) protocol data unit (PDU) through the PSSCH, based on the first slot,
wherein the first slot includes a first candidate start symbol and a second candidate start symbol, and
wherein whether the second candidate start symbol is used as an automatic gain control (AGC) symbol is determined based on information related to a resource block (RB) set configured to a sidelink (SL) bandwidth part (BWP).

**20.** The second device of claim 19, wherein the second candidate start symbol is used as an AGC symbol, based on not all of entire RB sets configured to the SL BWP being used for a transmission related to the first candidate start symbol.

FIG. 1

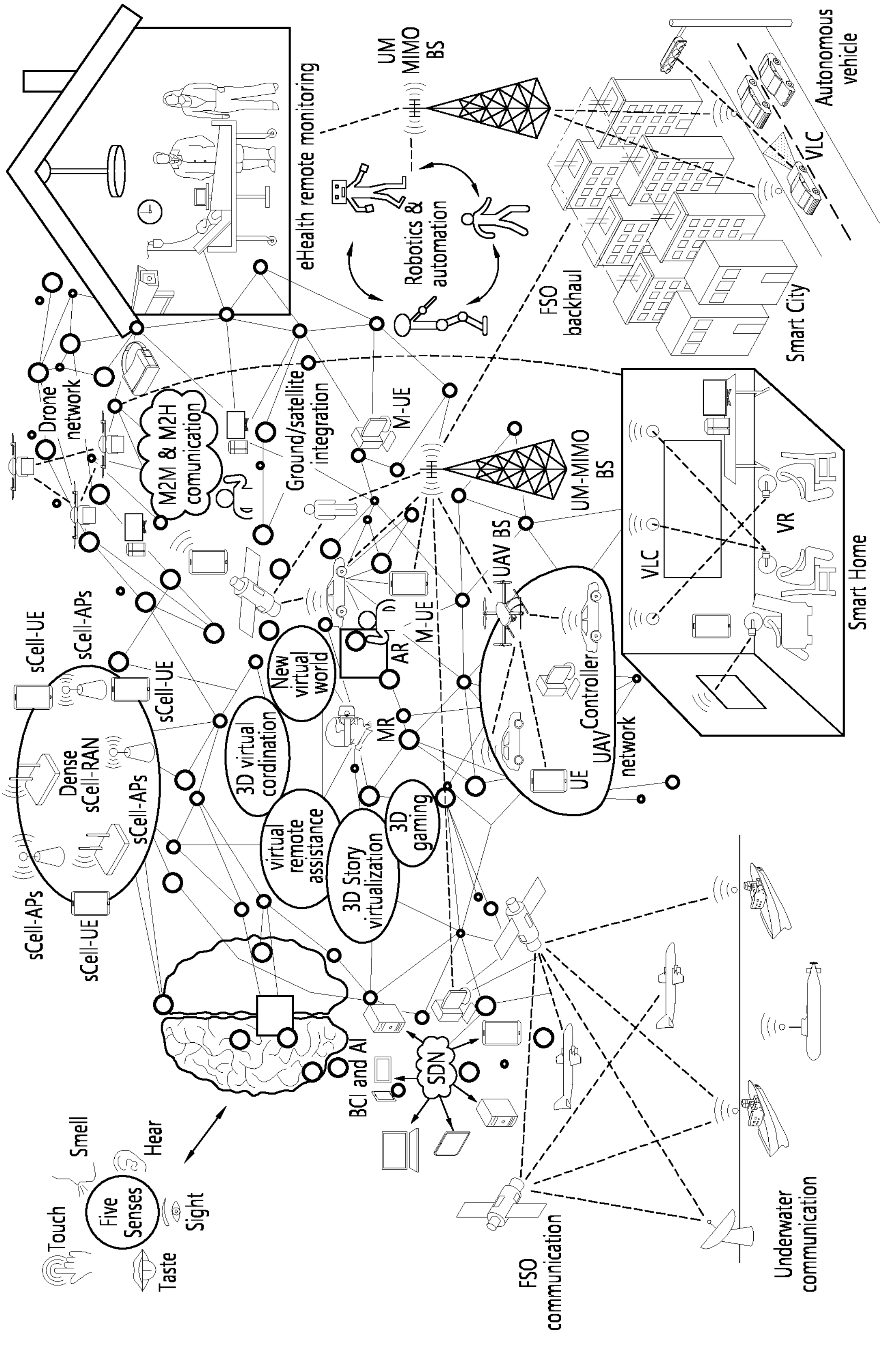
eHealth remote monitoring
UM MIMO BS
Robotics & automation
Autonomous vehicle
VLC
FSO backhaul
Smart City
Drone network
M2M & M2H comunication
Ground/satellite integration
M-UE
UM-MIMO BS
UAV BS
sCell-UE
sCell-APs
sCell-UE
Dense sCell-RAN
sCell-APs
sCell-APs
sCell-UE
New virtual world
3D virtual cordination
virtual remote assistance
3D Story virtualization
3D gaming
AR
M-UE
MR
Controller
UAV network
UE
VLC
VR
Smart Home
Five Senses
Touch
Smell
Hear
Sight
Taste
BCI and AI
SDN
FSO communication
Underwater communication

FIG. 2

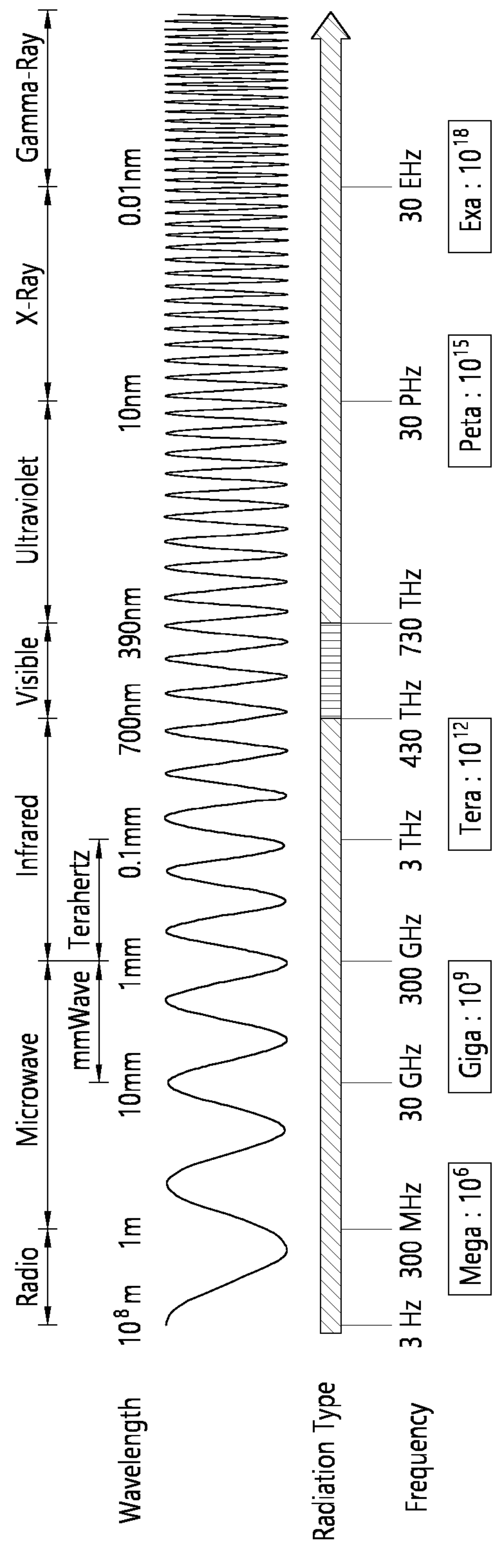
Wavelength
Radiation Type
Frequency
Radio
Microwave
mmWave
Terahertz
Infrared
Visible
Ultraviolet
X-Ray
Gamma-Ray
10^8 m
1m
10mm
1mm
0.1mm
700nm
390nm
10nm
0.01nm
3 Hz
300 MHz
30 GHz
300 GHz
3 THz
430 THz
730 THz
30 PHz
30 EHz
Mega : 10^6
Giga : 10^9
Tera : 10^12
Peta : 10^15
Exa : 10^18

FIG. 3

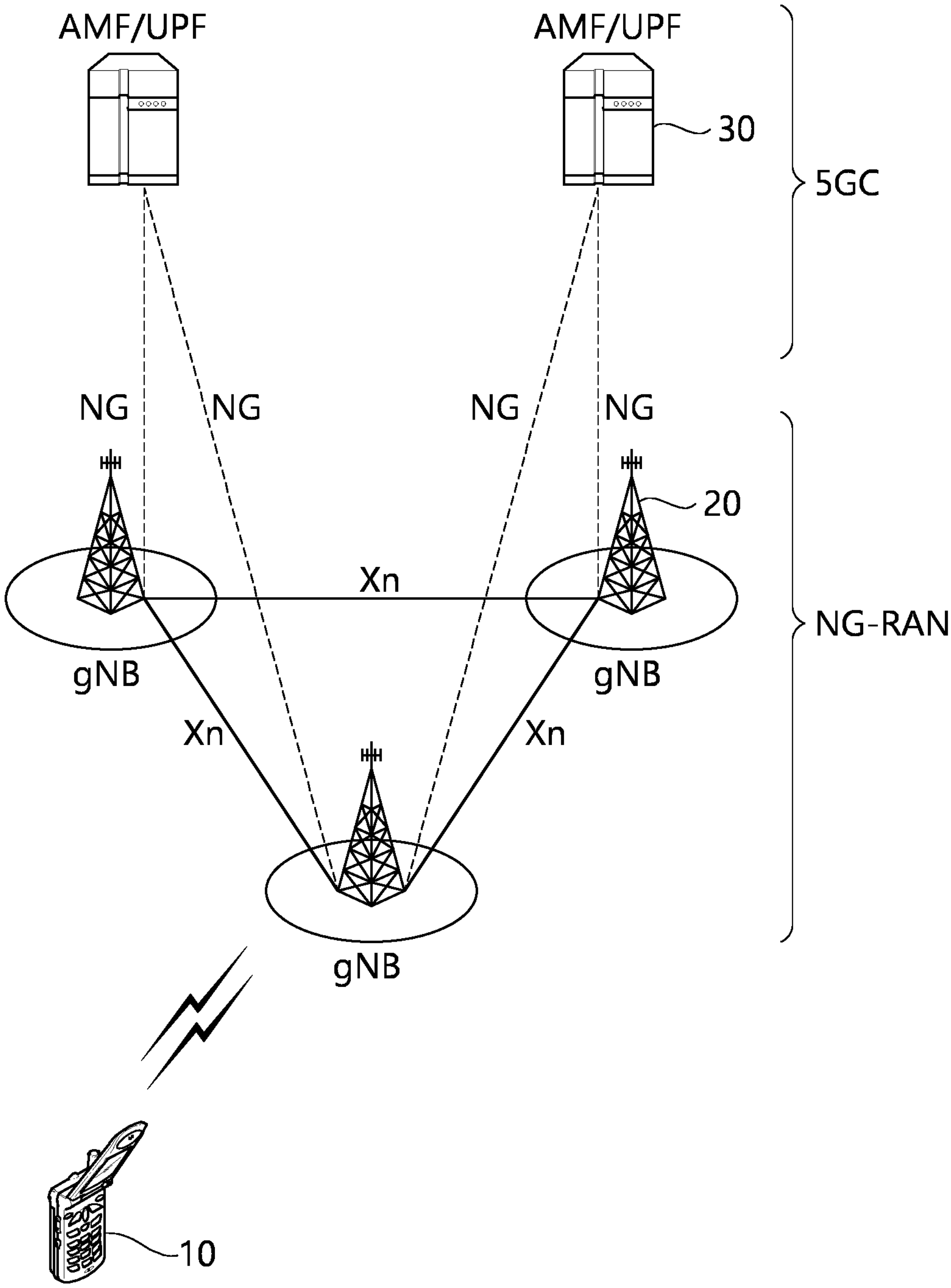

FIG. 4

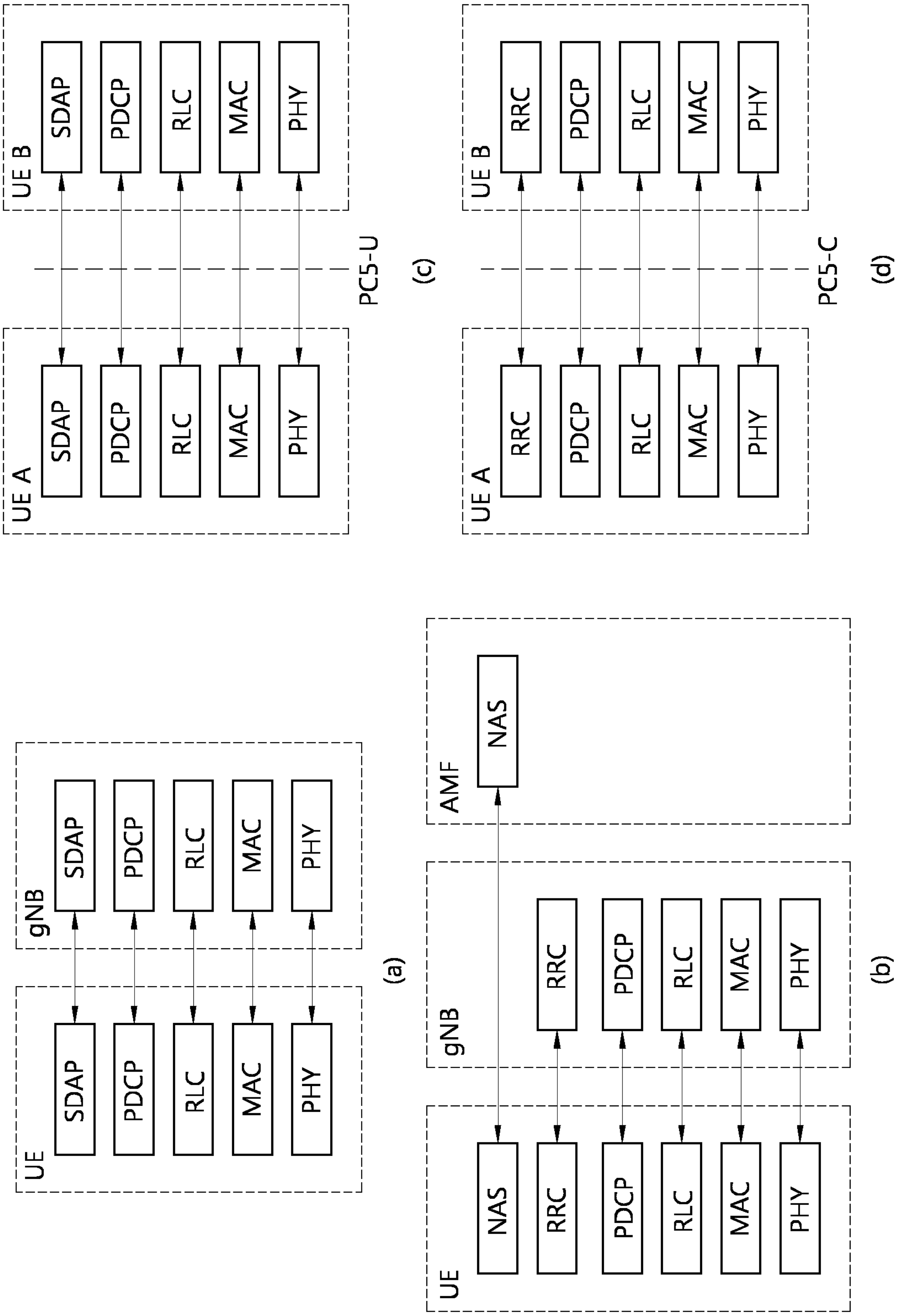
UE
SDAP
PDCP
RLC
MAC
PHY
gNB
SDAP
PDCP
RLC
MAC
PHY
(a)
UE
NAS
RRC
PDCP
RLC
MAC
PHY
gNB
RRC
PDCP
RLC
MAC
PHY
AMF
NAS
(b)
UE A
SDAP
PDCP
RLC
MAC
PHY
PC5-U
UE B
SDAP
PDCP
RLC
MAC
PHY
(c)
UE A
RRC
PDCP
RLC
MAC
PHY
PC5-C
UE B
RRC
PDCP
RLC
MAC
PHY
(d)

FIG. 5

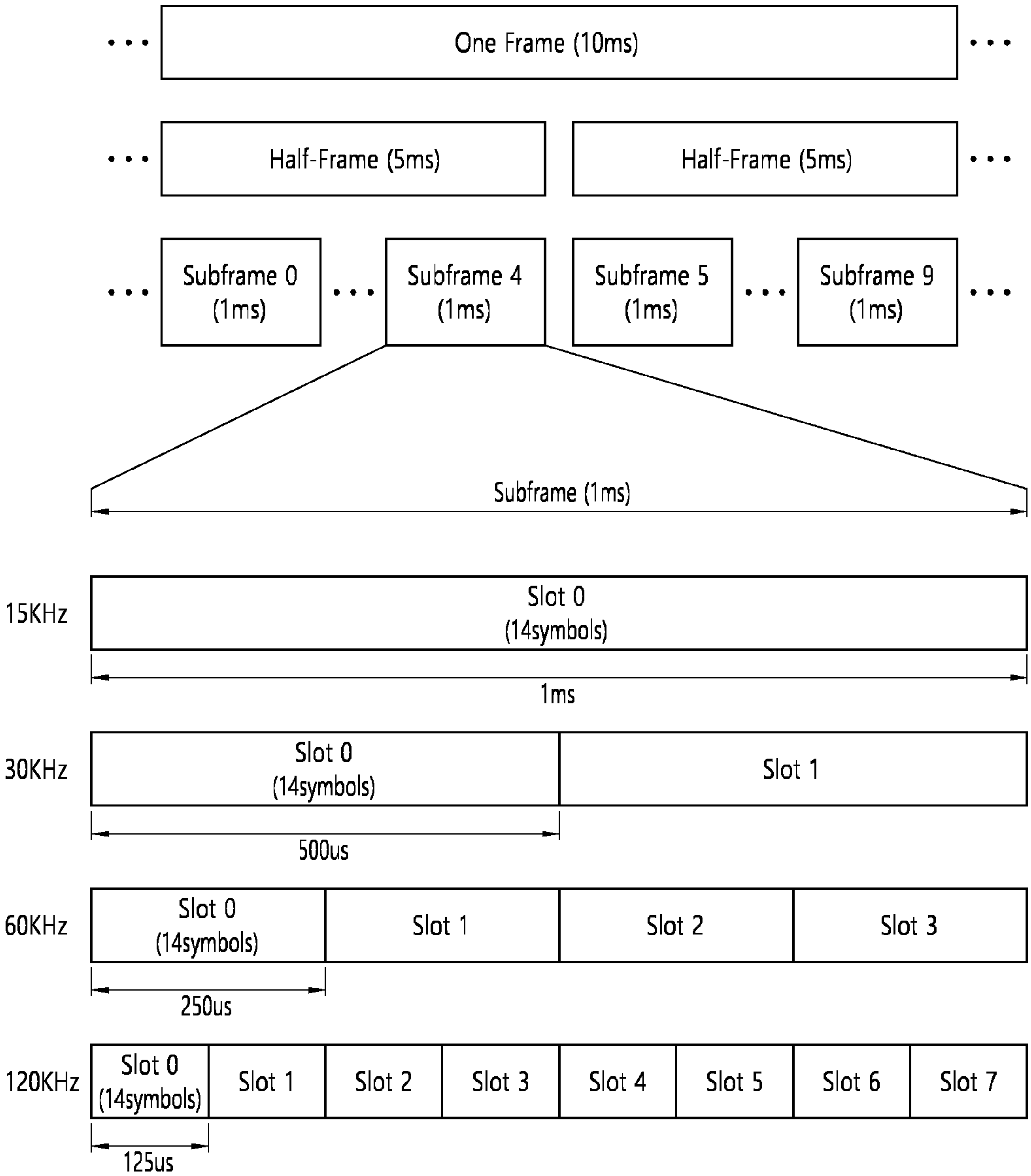
One Frame (10ms)
Half-Frame (5ms)
Half-Frame (5ms)
Subframe 0 (1ms)
Subframe 4 (1ms)
Subframe 5 (1ms)
Subframe 9 (1ms)
Subframe (1ms)
15KHz
Slot 0 (14symbols)
1ms
30KHz
Slot 0 (14symbols)
Slot 1
500us
60KHz
Slot 0 (14symbols)
Slot 1
Slot 2
Slot 3
250us
120KHz
Slot 0 (14symbols)
Slot 1
Slot 2
Slot 3
Slot 4
Slot 5
Slot 6
Slot 7
125us

FIG. 6

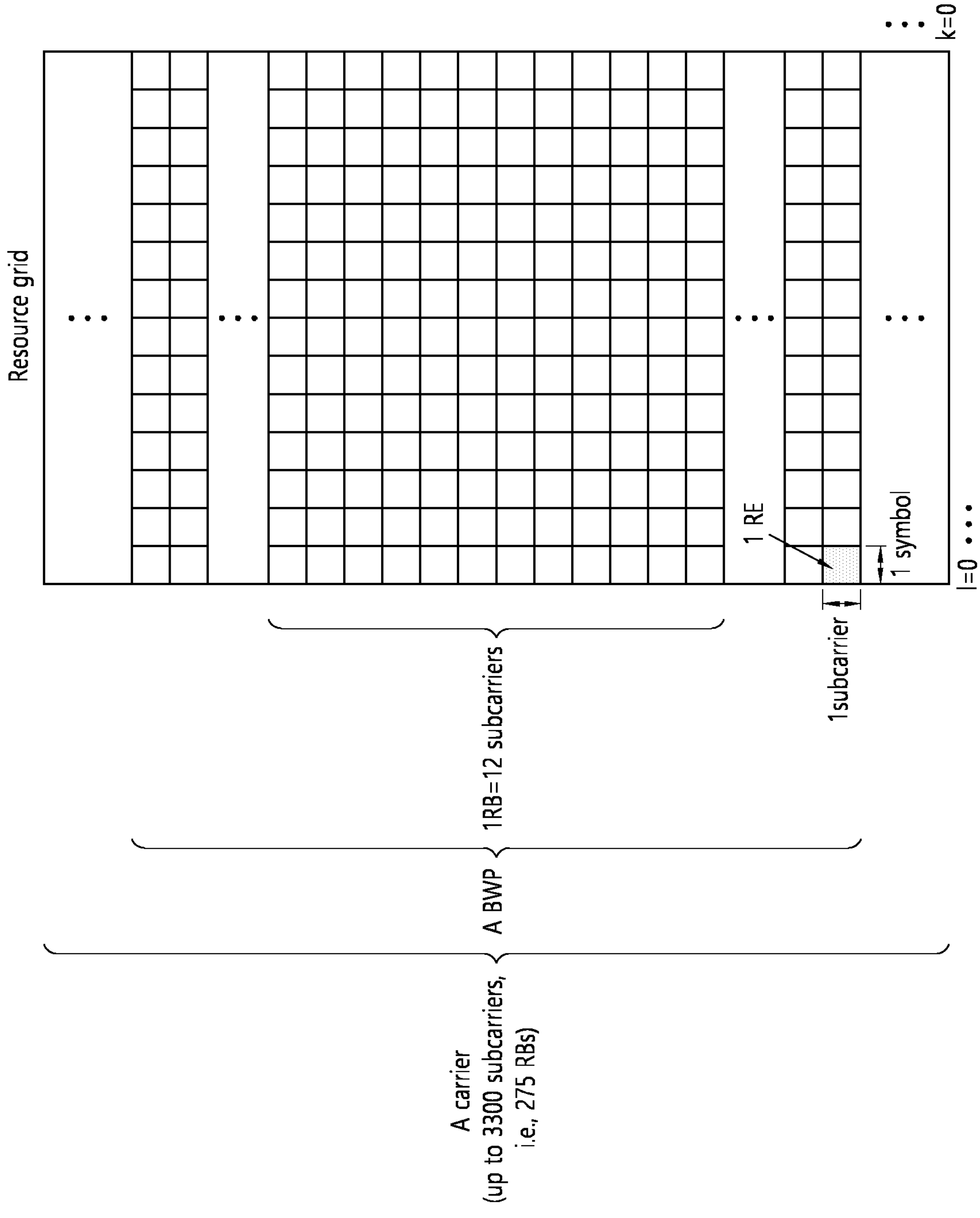
Resource grid
k=0
l=0
1 RE
1 symbol
1subcarrier
1RB=12 subcarriers
A BWP
A carrier
(up to 3300 subcarriers,
i.e., 275 RBs)

FIG. 7

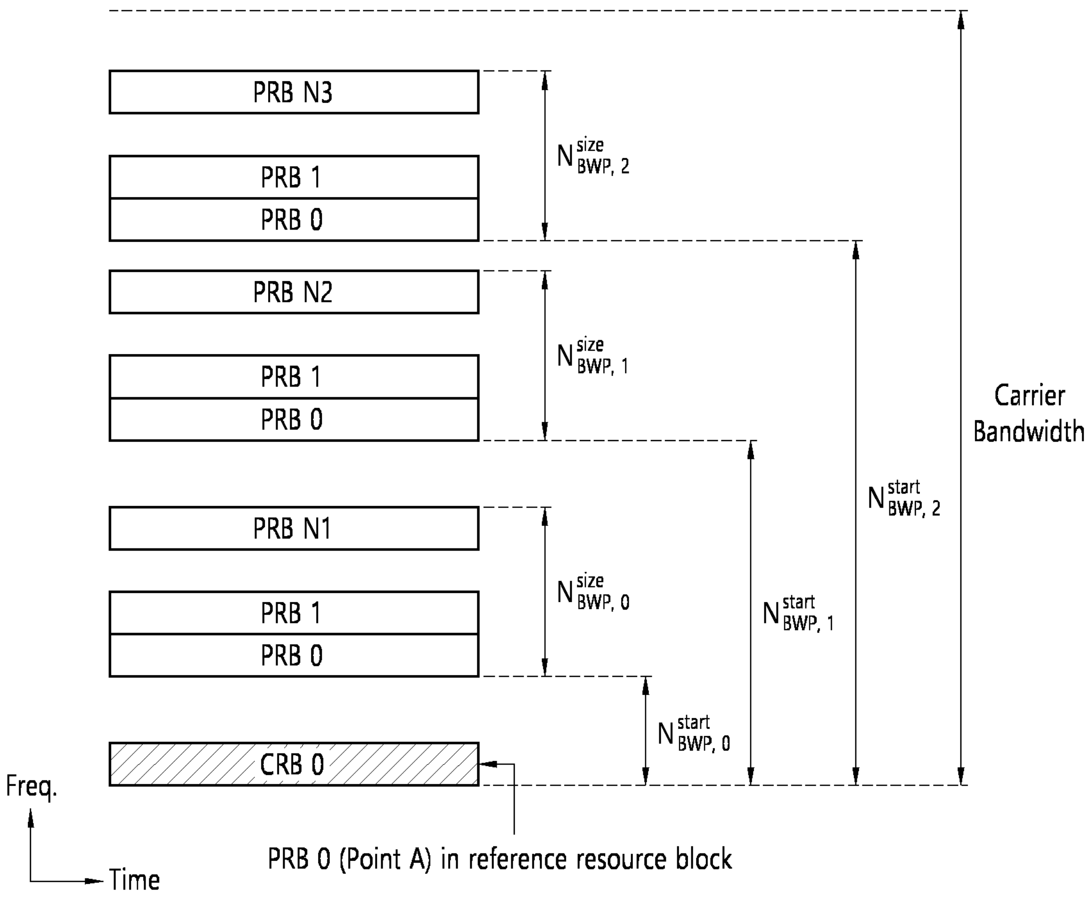
PRB N3
PRB 1
PRB 0
PRB N2
PRB 1
PRB 0
PRB N1
PRB 1
PRB 0
CRB 0
$N^{size}_{BWP,2}$
$N^{size}_{BWP,1}$
$N^{size}_{BWP,0}$
$N^{start}_{BWP,0}$
$N^{start}_{BWP,1}$
$N^{start}_{BWP,2}$
Carrier Bandwidth
Freq.
Time
PRB 0 (Point A) in reference resource block

FIG. 8

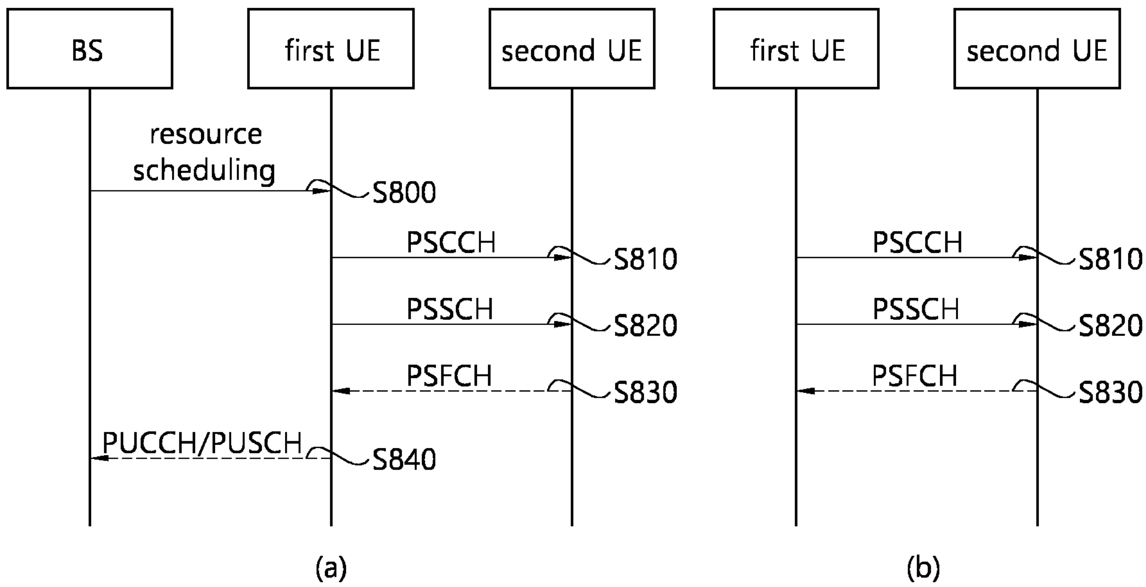
BS
first UE
second UE
first UE
second UE
resource scheduling
S800
PSCCH
S810
PSSCH
S820
PSFCH
S830
PUCCH/PUSCH
S840
PSCCH
S810
PSSCH
S820
PSFCH
S830
(a)
(b)

FIG. 9

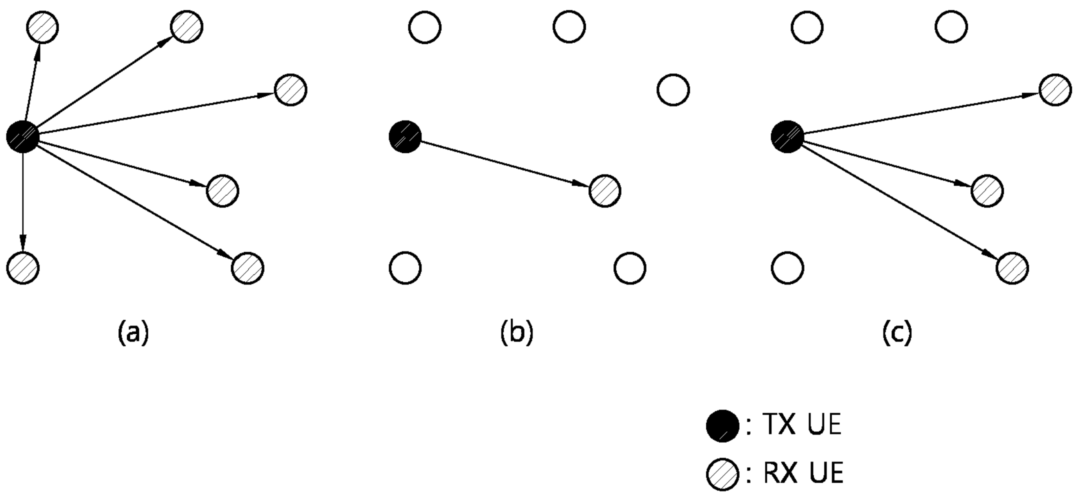
(a)
(b)
(c)
: TX UE
: RX UE

# FIG. 10

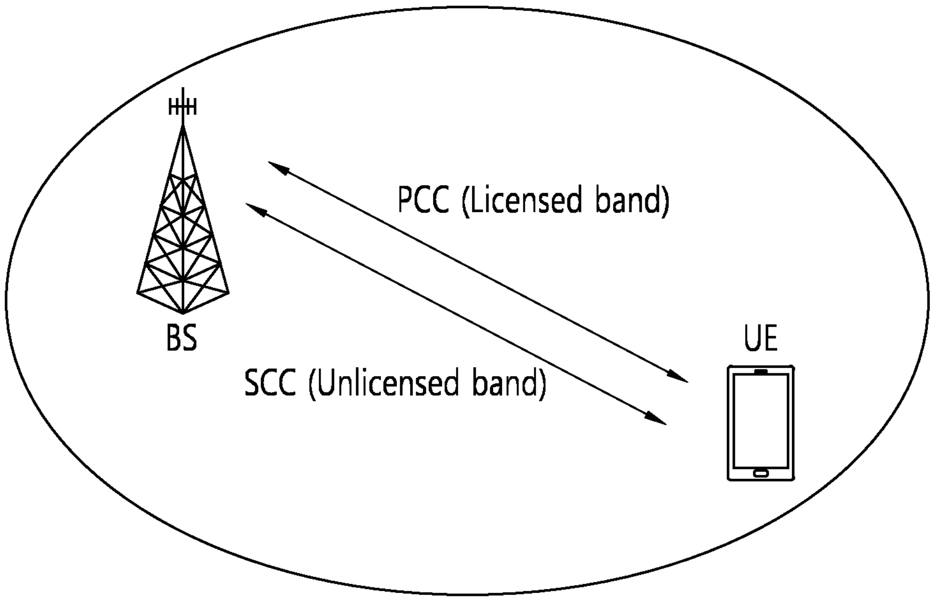


(a) Carrier aggregation between L-band and U-band

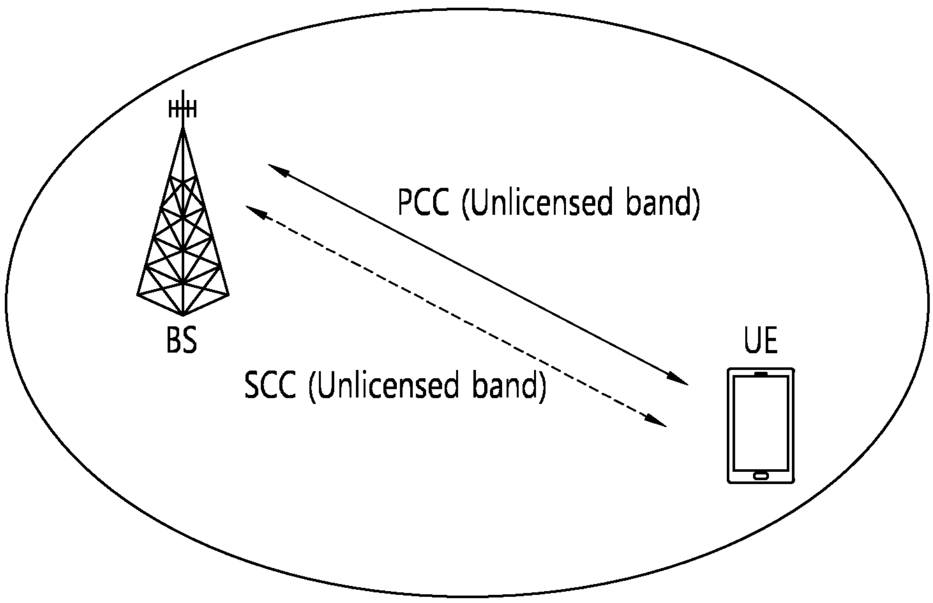


(b) Standalone U-band(s)

FIG. 11

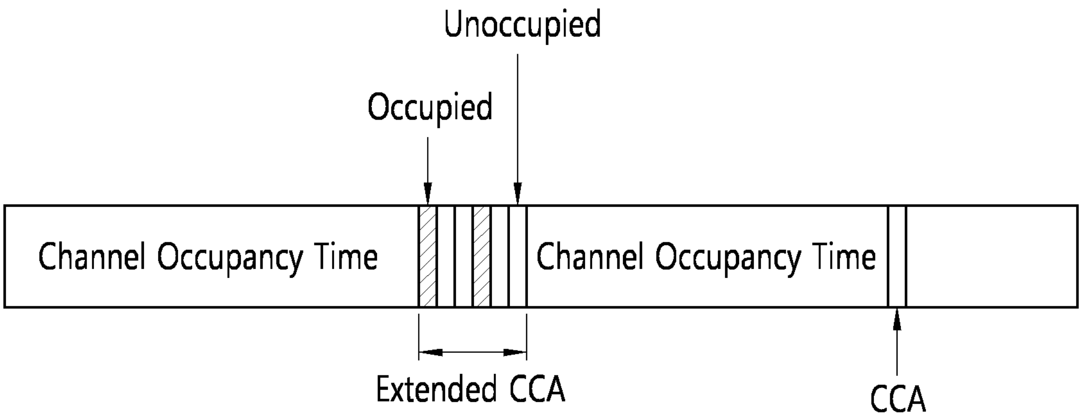
Unoccupied
Occupied
Channel Occupancy Time
Channel Occupancy Time
Extended CCA
CCA

FIG. 12

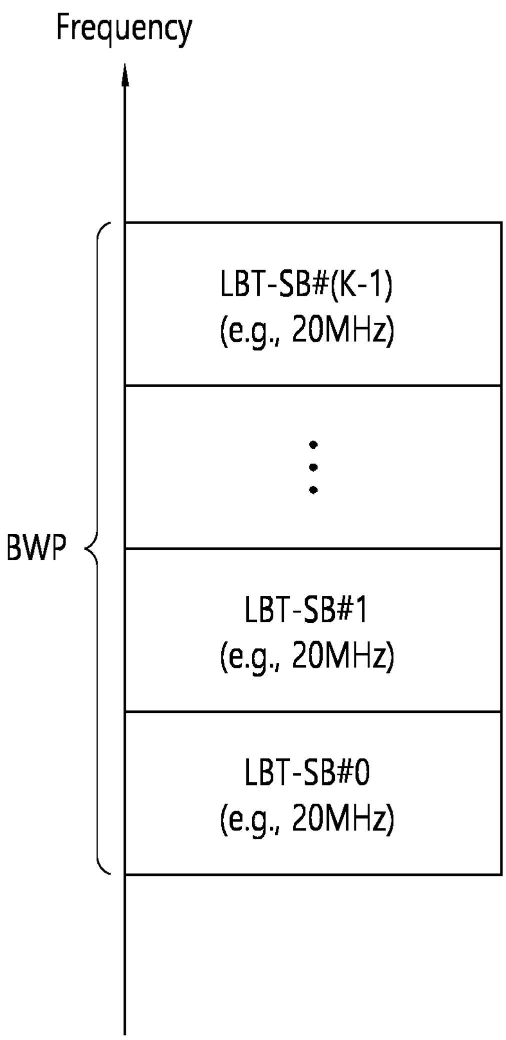
Frequency
LBT-SB#(K-1)
(e.g., 20MHz)
BWP
LBT-SB#1
(e.g., 20MHz)
LBT-SB#0
(e.g., 20MHz)

FIG. 13

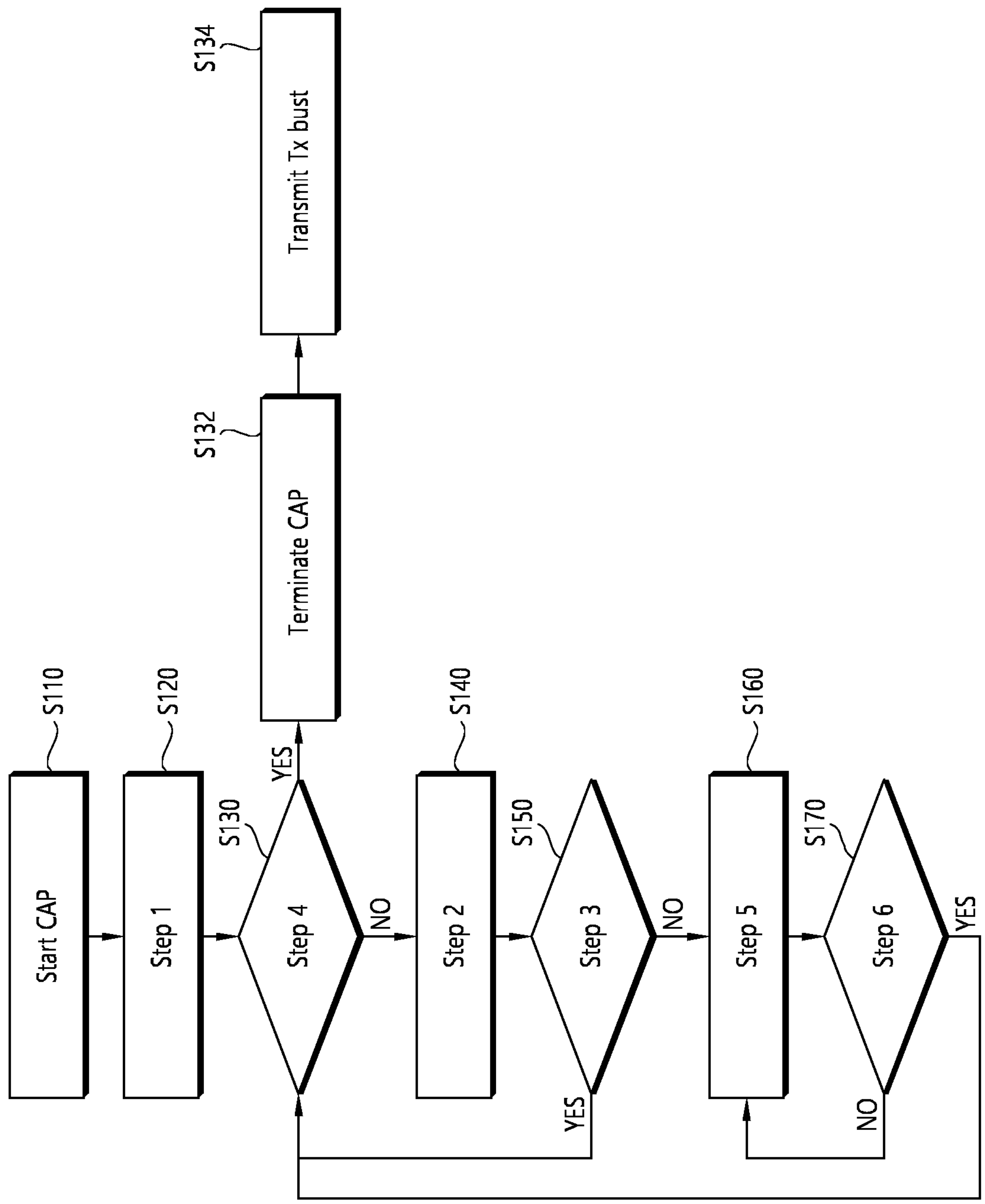
S110
Start CAP
S120
Step 1
S130
Step 4
YES
NO
S132
Terminate CAP
S134
Transmit Tx bust
S140
Step 2
S150
Step 3
NO
YES
S160
Step 5
S170
Step 6
YES
NO

FIG. 14

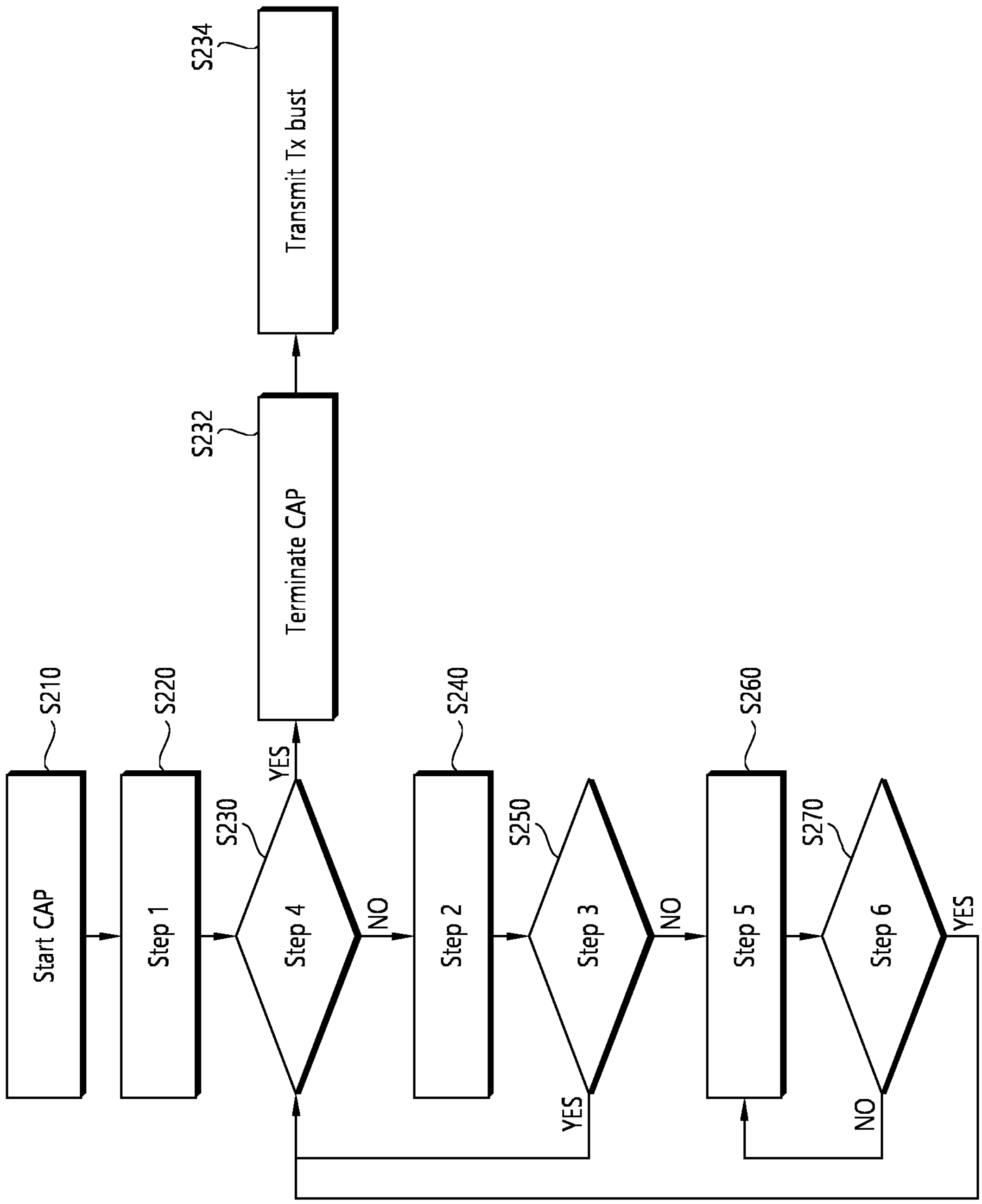
S210
Start CAP
S220
Step 1
S230
Step 4
YES
NO
S232
Terminate CAP
S234
Transmit Tx bust
S240
Step 2
S250
Step 3
YES
NO
S260
Step 5
S270
Step 6
NO
YES

FIG. 15

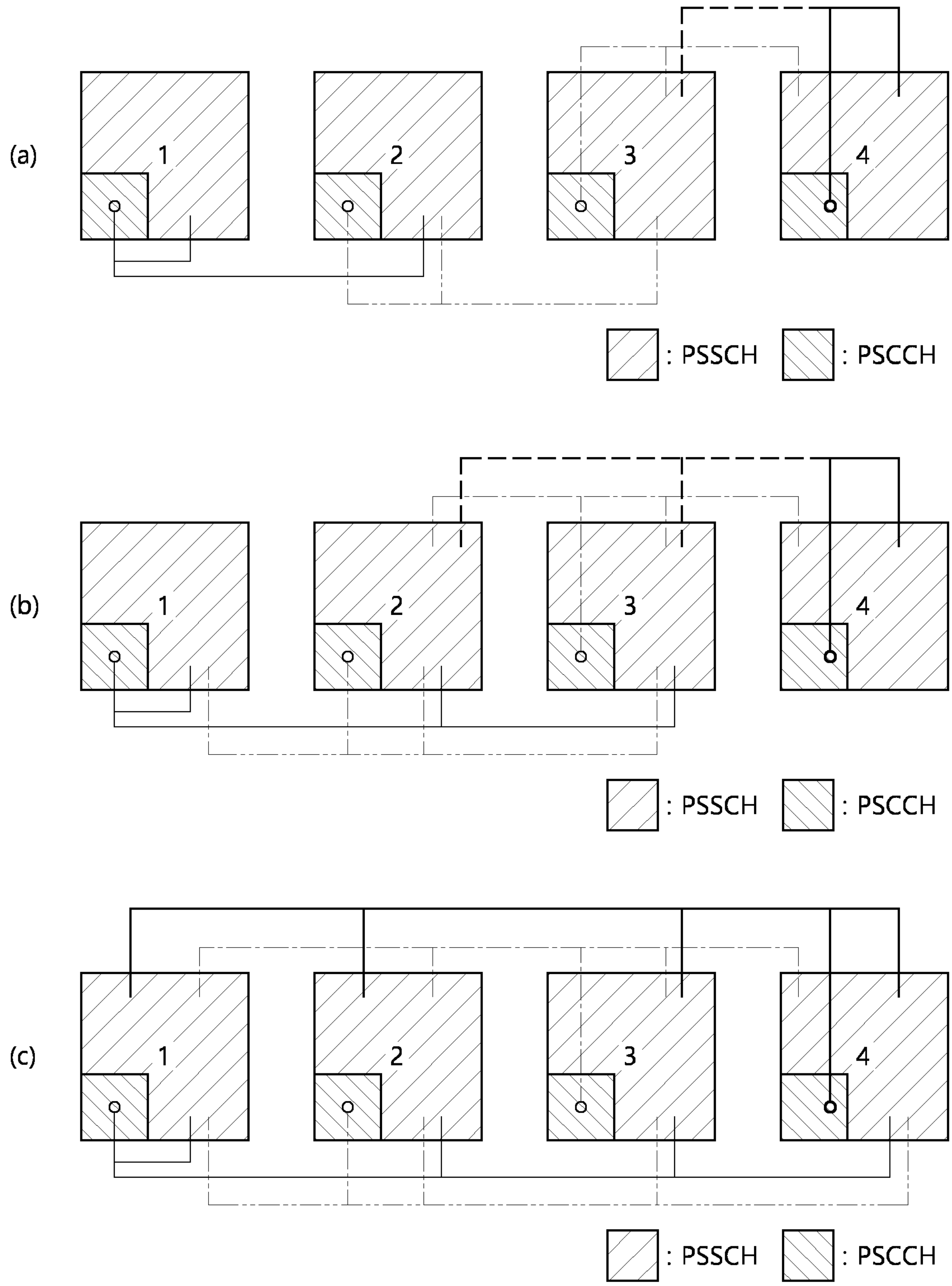

FIG. 16

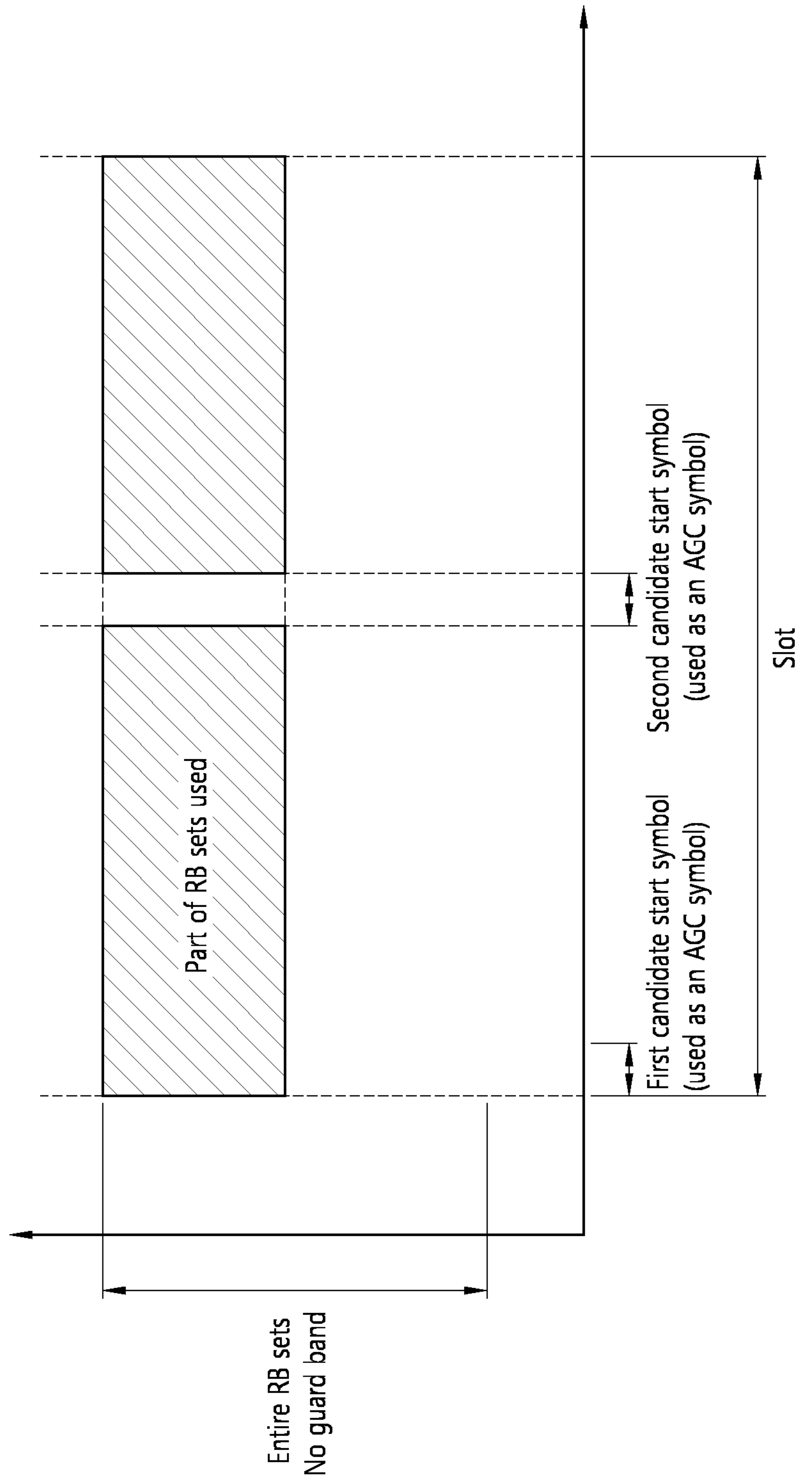
Part of RB sets used
Second candidate start symbol
(used as an AGC symbol)
First candidate start symbol
(used as an AGC symbol)
Slot
Entire RB sets
No guard band

FIG. 17

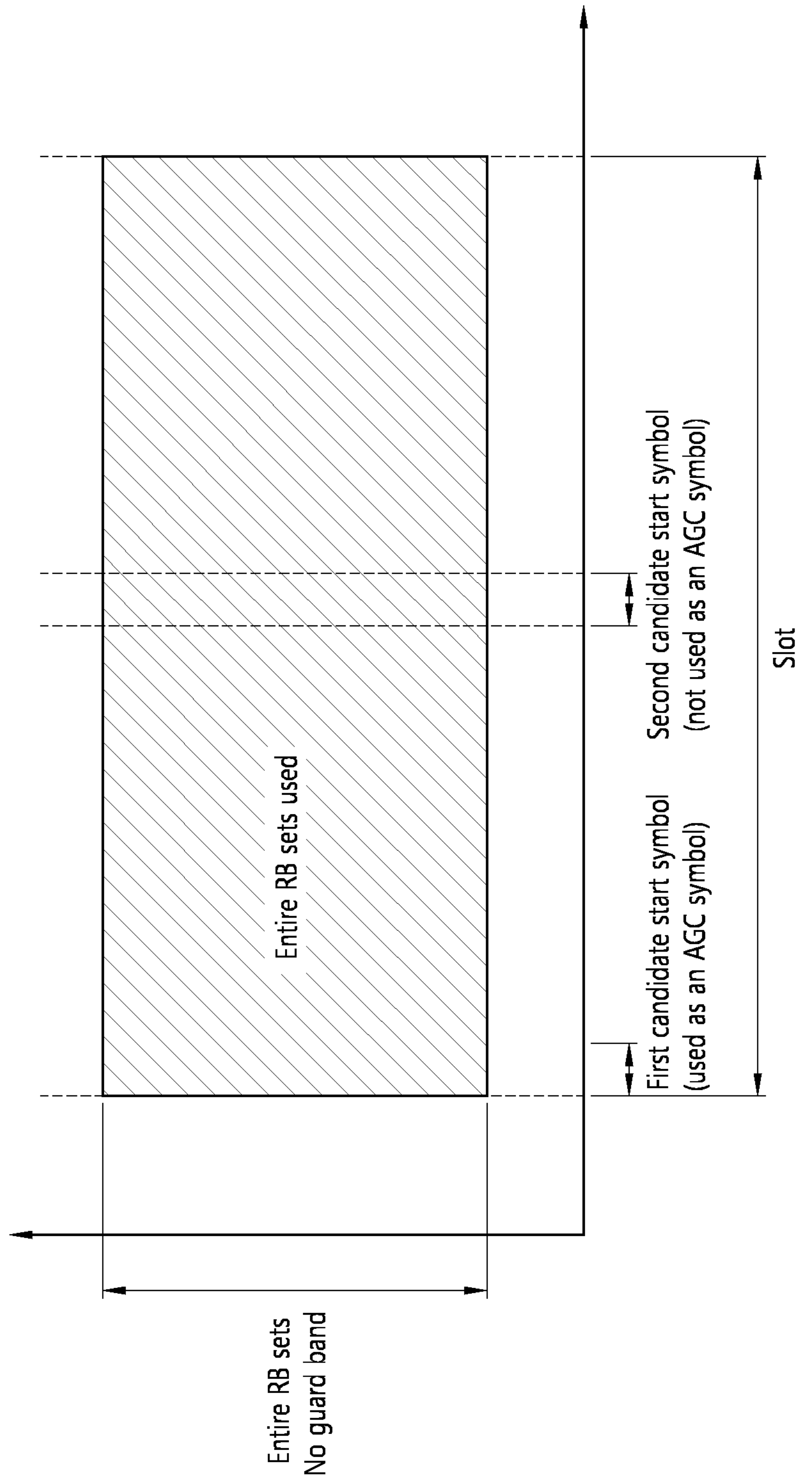
Entire RB sets used
Second candidate start symbol
(not used as an AGC symbol)
First candidate start symbol
(used as an AGC symbol)
Slot
Entire RB sets
No guard band

FIG. 18

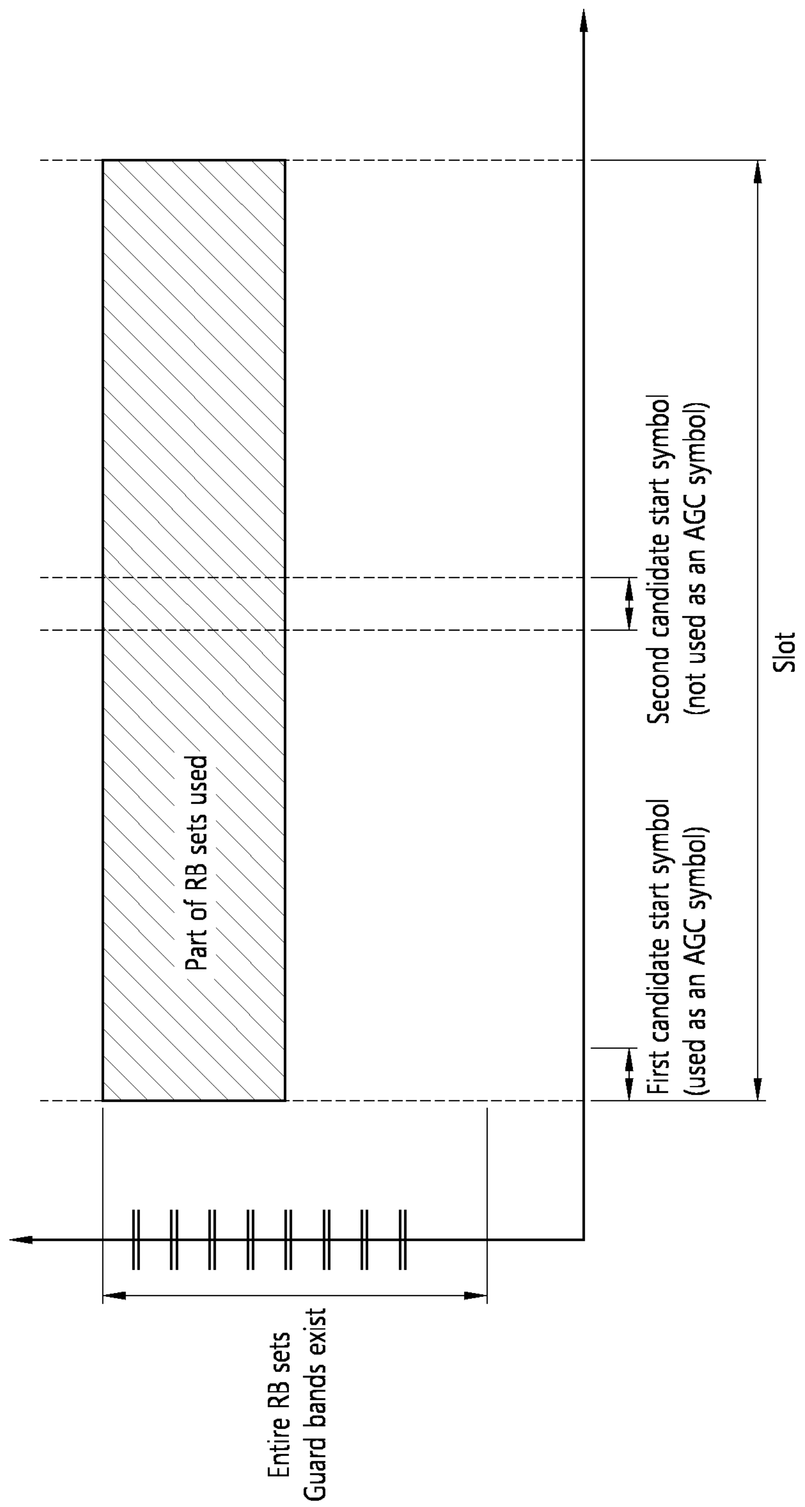
Part of RB sets used
Second candidate start symbol
(not used as an AGC symbol)
First candidate start symbol
(used as an AGC symbol)
Slot
Entire RB sets
Guard bands exist

FIG. 19

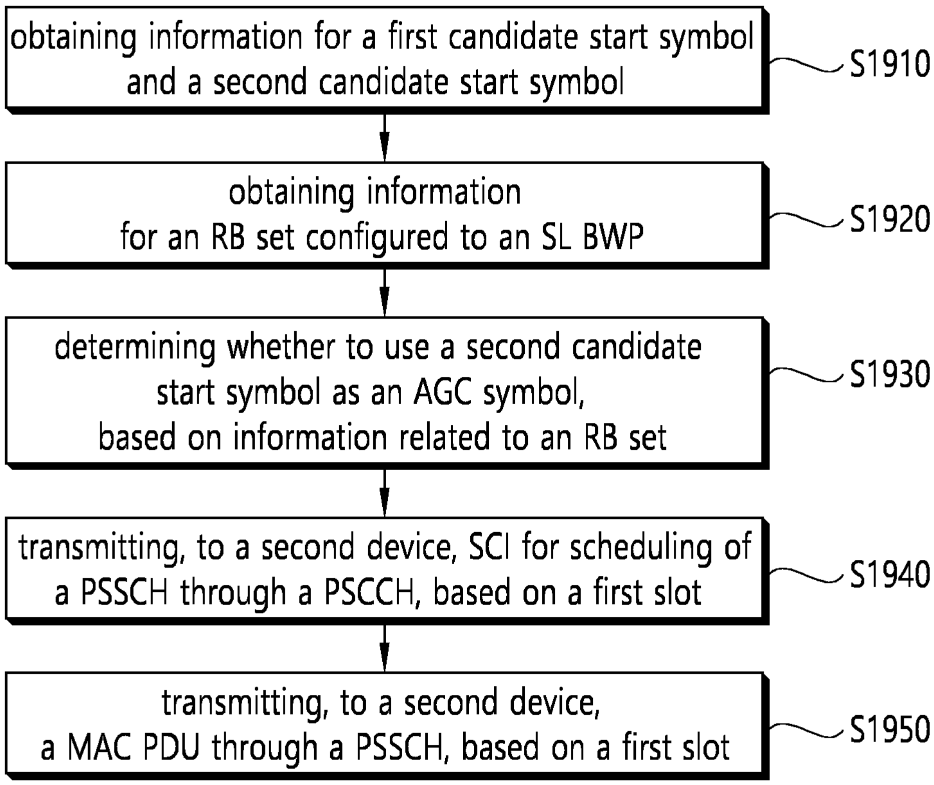
obtaining information for a first candidate start symbol and a second candidate start symbol
S1910
obtaining information for an RB set configured to an SL BWP
S1920
determining whether to use a second candidate start symbol as an AGC symbol, based on information related to an RB set
S1930
transmitting, to a second device, SCI for scheduling of a PSSCH through a PSCCH, based on a first slot
S1940
transmitting, to a second device, a MAC PDU through a PSSCH, based on a first slot
S1950

FIG. 20

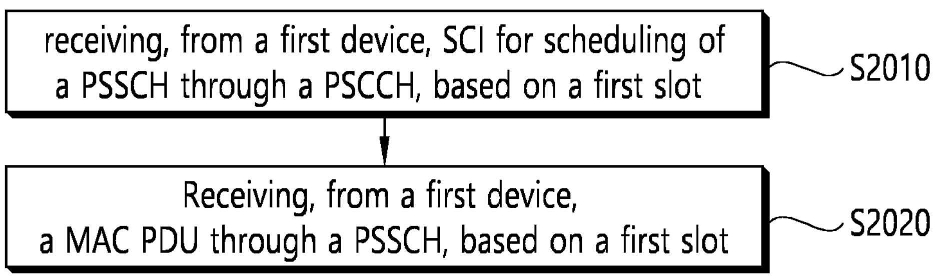
receiving, from a first device, SCI for scheduling of a PSSCH through a PSCCH, based on a first slot
S2010
Receiving, from a first device, a MAC PDU through a PSSCH, based on a first slot
S2020

FIG. 21

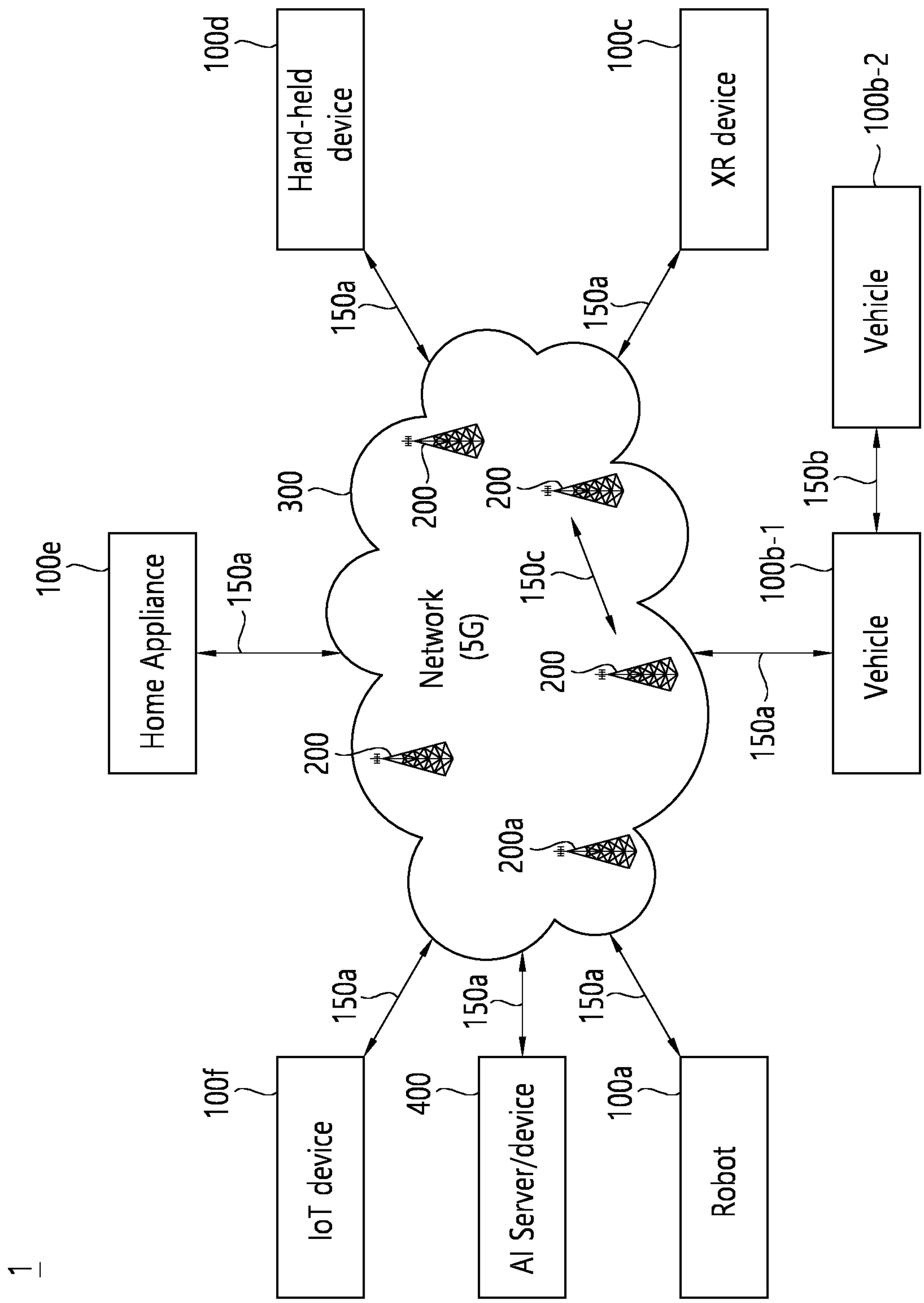
1
Hand-held device
100d
XR device
100c
Vehicle
100b-2
Vehicle
100b-1
150a
150b
150c
Home Appliance
100e
300
200
200a
Network (5G)
IoT device
100f
AI Server/device
400
Robot
100a

FIG. 22

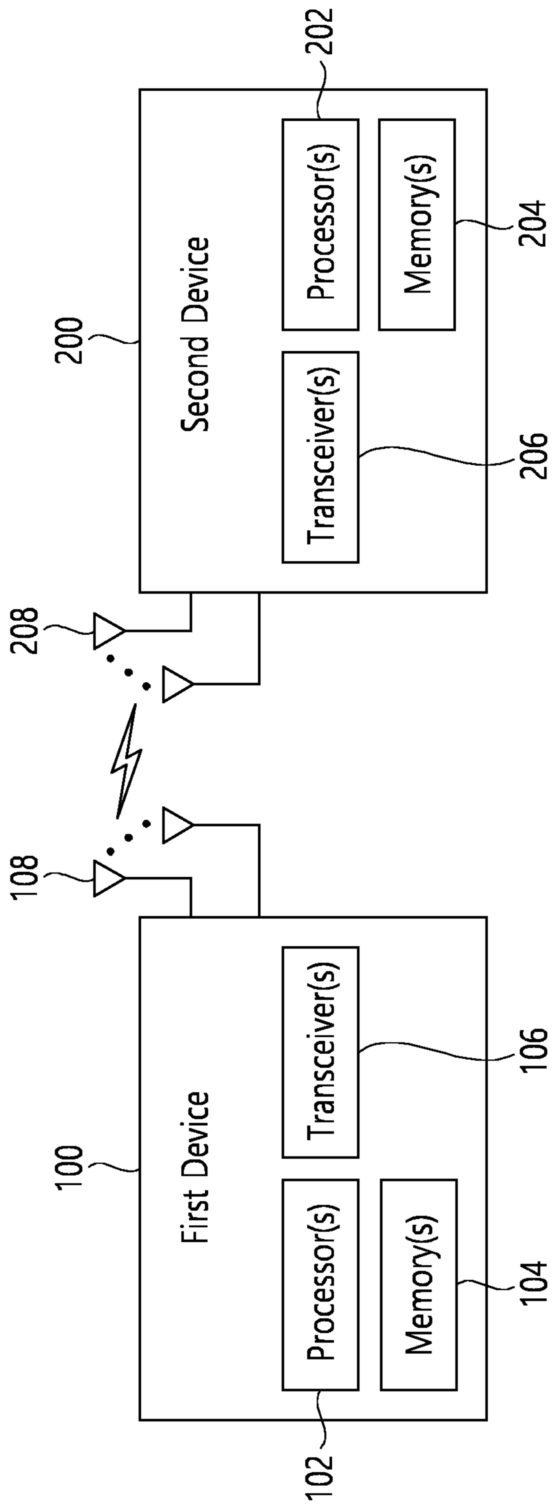
200
Second Device
202
Processor(s)
Memory(s)
204
Transceiver(s)
206
208
108
100
First Device
Transceiver(s)
106
Processor(s)
Memory(s)
104
102

# FIG. 23

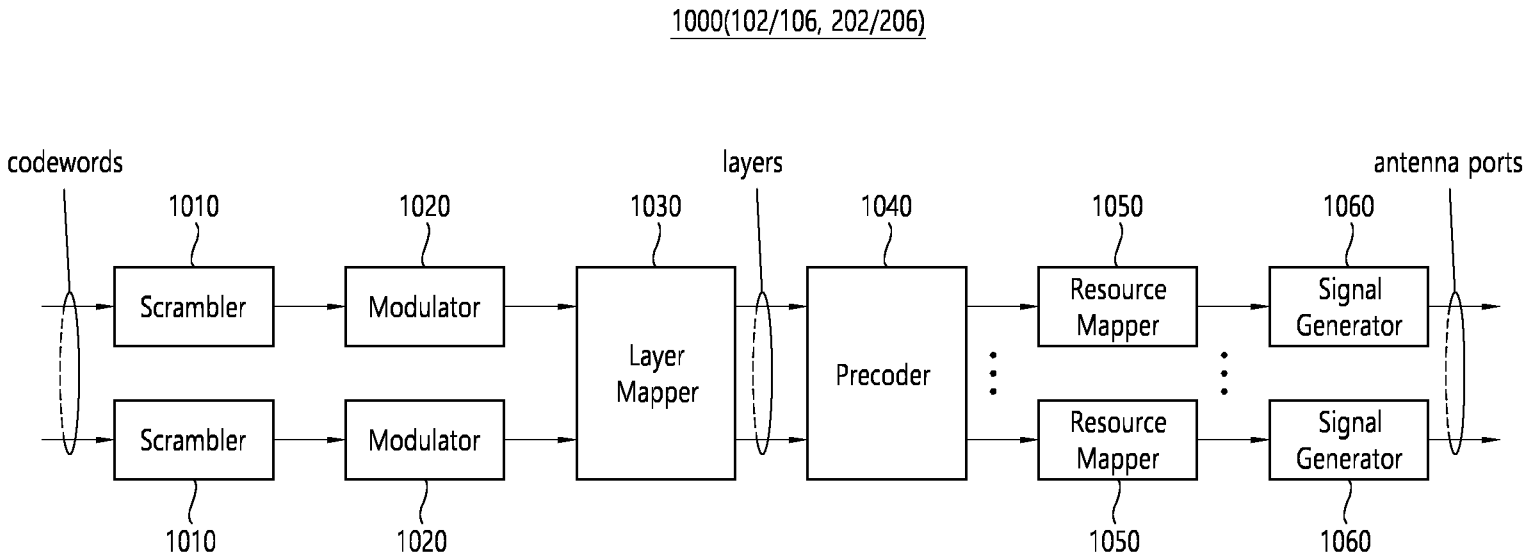
1000(102/106, 202/206)
codewords
layers
antenna ports
1010
1020
1030
1040
1050
1060
Scrambler
Modulator
Layer Mapper
Precoder
Resource Mapper
Signal Generator
Scrambler
Modulator
Resource Mapper
Signal Generator
1010
1020
1050
1060

FIG. 24

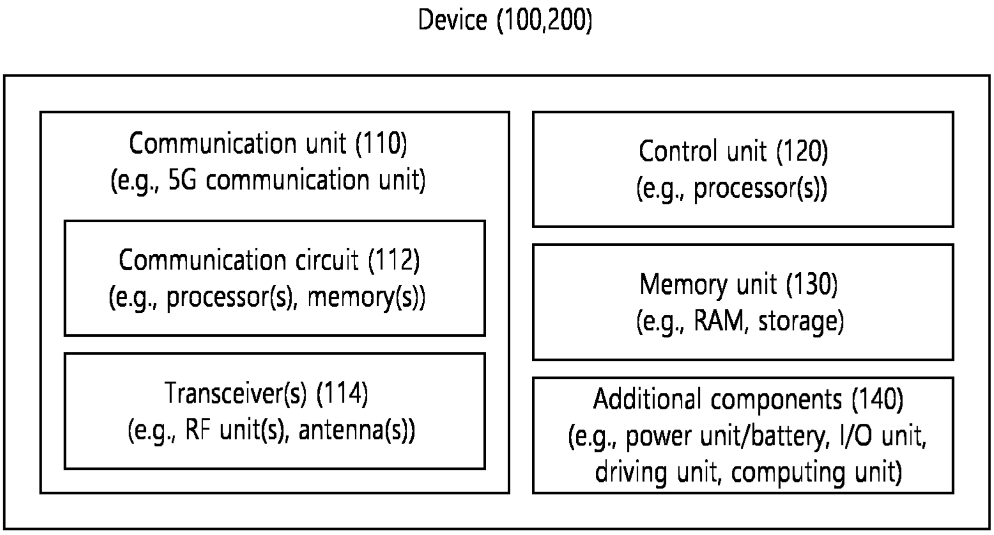
Device (100,200)
Communication unit (110)
(e.g., 5G communication unit)
Communication circuit (112)
(e.g., processor(s), memory(s))
Transceiver(s) (114)
(e.g., RF unit(s), antenna(s))
Control unit (120)
(e.g., processor(s))
Memory unit (130)
(e.g., RAM, storage)
Additional components (140)
(e.g., power unit/battery, I/O unit,
driving unit, computing unit)

FIG. 25

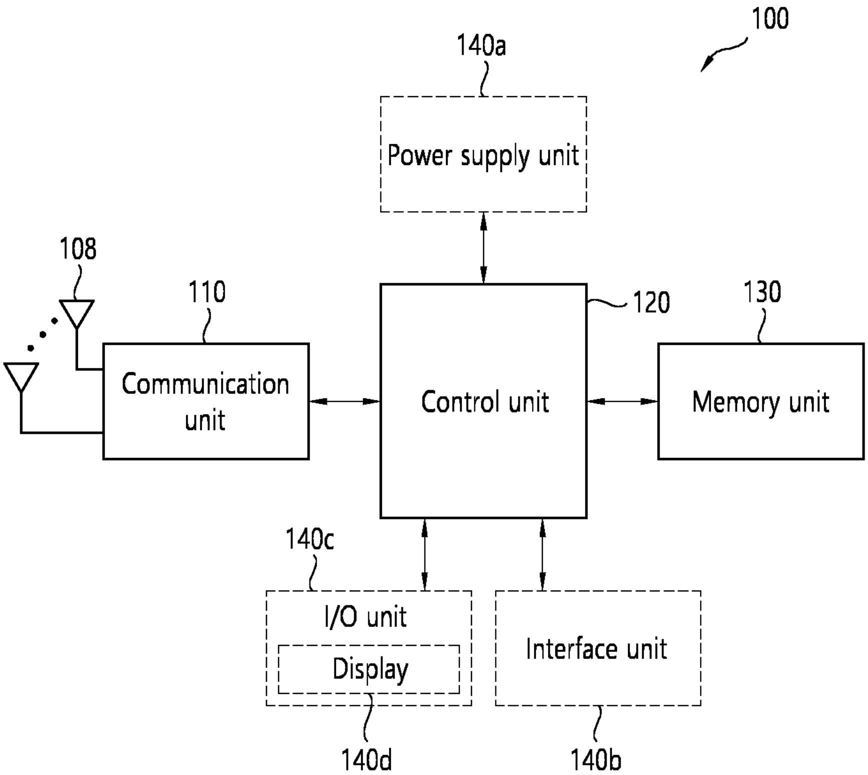
100
140a
Power supply unit
108
110
Communication unit
Control unit
120
130
Memory unit
140c
I/O unit
Display
Interface unit
140d
140b

FIG. 26

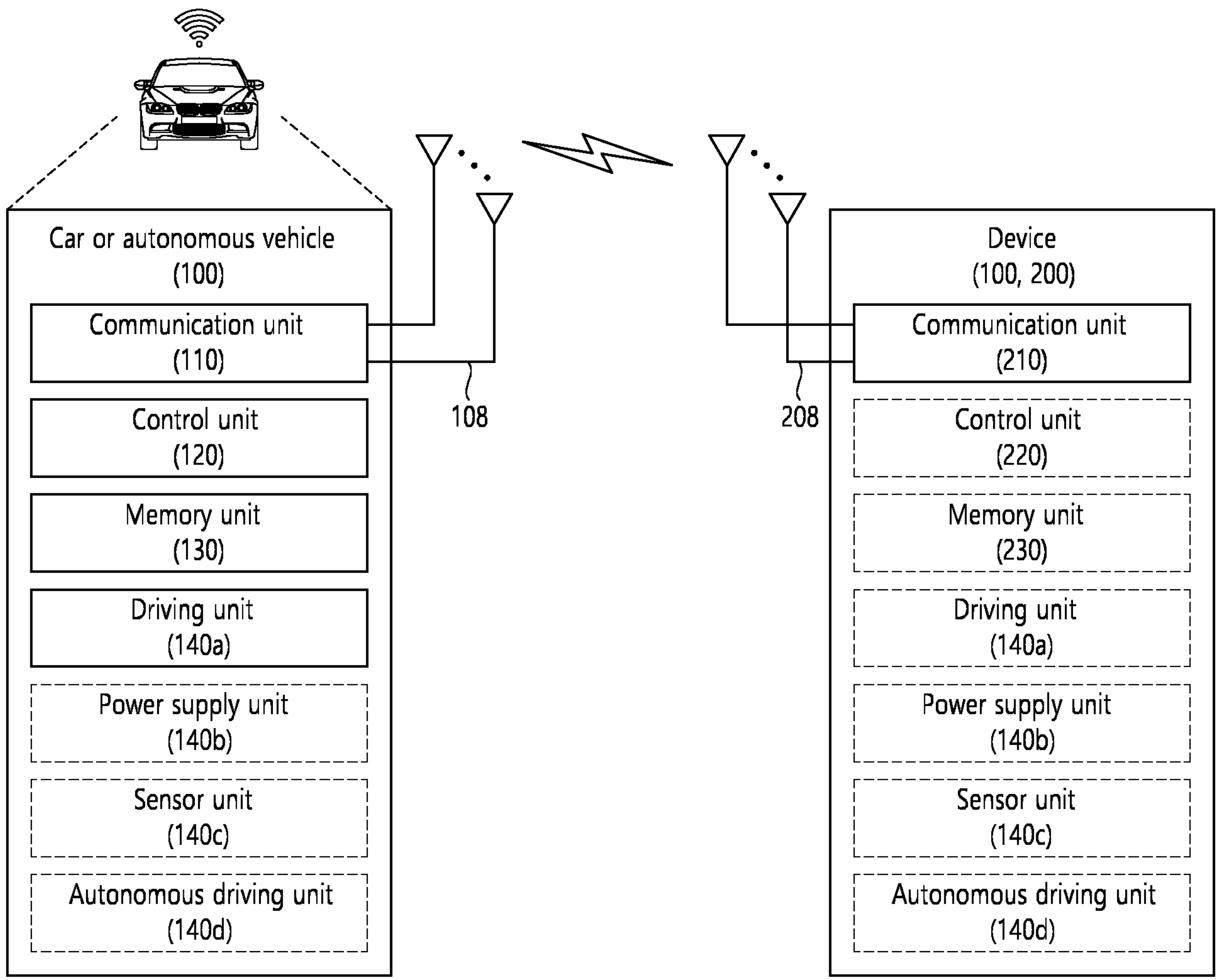
Car or autonomous vehicle
(100)
Communication unit
(110)
Control unit
(120)
Memory unit
(130)
Driving unit
(140a)
Power supply unit
(140b)
Sensor unit
(140c)
Autonomous driving unit
(140d)
108
208
Device
(100, 200)
Communication unit
(210)
Control unit
(220)
Memory unit
(230)
Driving unit
(140a)
Power supply unit
(140b)
Sensor unit
(140c)
Autonomous driving unit
(140d)

## INTERNATIONAL SEARCH REPORT

International application No.
**PCT/KR2023/015571**

**A. CLASSIFICATION OF SUBJECT MATTER**

**H04W 72/25**(2023.01)i; **H04W 72/04**(2009.01)i; **H04W 72/12**(2009.01)i; **H04L 5/00**(2006.01)i; **H04W 74/08**(2009.01)i

According to International Patent Classification (IPC) or to both national classification and IPC

**B. FIELDS SEARCHED**

Minimum documentation searched (classification system followed by classification symbols)

H04W 72/25(2023.01); H04W 52/36(2009.01); H04W 52/52(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: first/second candidate starting symbol, slot, SL BWP, RB set, AGC (automatic gain control) symbol, PSCCH/PSSCH, SCI, MAC PDU

**C. DOCUMENTS CONSIDERED TO BE RELEVANT**

| Category* | Citation of document, with indication, where appropriate, of the relevant passages | Relevant to claim No. |
|---|---|---|
| A | HUAWEI et al. Physical channel design for sidelink operation over unlicensed spectrum. R1-2208449, 3GPP TSG-RAN WG1 Meeting #110bis-e, e-Meeting. 30 September 2022. See sections 2.1-3. | 1-20 |
| A | LG ELECTRONICS. Discussion on physical channel design framework for sidelink on unlicensed spectrum. R1-2209479, 3GPP TSG RAN WG1 #110bis-e, e-Meeting. 30 September 2022. See sections 2.1-3. | 1-20 |
| A | NOKIA et al. On Physical Channel Design Framework for SL-U. R1-2208357, 3GPP TSG RAN WG1 #110bis-e, e-Meeting. 30 September 2022. See section 2.3. | 1-20 |
| A | QUALCOMM INCORPORATED. Physical Channel Design for Sidelink on Unlicensed Spectrum. R1-2209986, 3GPP TSG-RAN WG1 #110-bis, e-Meeting. 30 September 2022. See sections 2-2.2.2. | 1-20 |
| A | US 2021-0400604 A1 (NEC CORPORATION) 23 December 2021 (2021-12-23) See paragraphs [0086]-[0103]; and figure 7. | 1-20 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 January 2024** | **18 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/015571**

| Patent document cited in search report | Publication date (day/month/year) | Patent family member(s) | Publication date (day/month/year) |
|---|---|---|---|
| US 2021-0400604 A1 | 23 December 2021 | EP 3850897 A1 | 21 July 2021 |
| | | JP 2022-510552 A | 27 January 2022 |
| | | WO 2020-073291 A1 | 16 April 2020 |

Form PCT/ISA/210 (patent family annex) (July 2022)